(19) Europäisches Patentamt
European Patent Office
Office européen des brevets

(11) EP 1 684 521 B1

(12) **EUROPEAN PATENT SPECIFICATION**

(45) Date of publication and mention of the grant of the patent:
**03.07.2019 Bulletin 2019/27**

(21) Application number: **05027344.0**

(22) Date of filing: **14.12.2005**

(51) Int Cl.:
*G10L 19/26* (2013.01)
*H04N 19/122* (2014.01)
*H04N 19/60* (2014.01)
*H04N 19/80* (2014.01)
*H04N 19/63* (2014.01)
*H04N 19/61* (2014.01)
*H04N 19/117* (2014.01)
*G10L 19/02* (2013.01)

(54) **Reversible 2-dimensional pre-/post-filtering for lapped biorthogonal transform**

Umkehrbare zweidimensionale Vor-/Nachfilterung für überlappende biorthogonale Transformation

Pré/post-filtrage bidimensionnel réversible pour transformation bi-orthogonale chevauchée

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.01.2005 US 35991**

(43) Date of publication of application:
**26.07.2006 Bulletin 2006/30**

(73) Proprietor: **Microsoft Technology Licensing, LLC**
**Redmond, WA 98052 (US)**

(72) Inventors:
- **Tu, Chengjie**
  **Redmond, WA 98052 (US)**
- **Srinivasan, Sridhar**
  **Redmond, WA 98052 (US)**

(74) Representative: **Grünecker Patent- und Rechtsanwälte**
**PartG mbB**
**Leopoldstraße 4**
**80802 München (DE)**

(56) References cited:
**EP-A1- 1 202 219**

- **TRAN T D ET AL: "Regularity-constrained pre- and post-filtering for block DCT-based systems" IEEE TRANSACTIONS ON SIGNAL PROCESSING, IEEE SERVICE CENTER, NEW YORK, NY, US LNKD- DOI:10.1109/TSP.2003.811222, vol. 51, no. 10, 1 October 2003 (2003-10-01), pages 2568-2581, XP011101066 ISSN: 1053-587X**
- **CHENGJIE TU ET AL: "Lapped transform via time-domain pre- and post-filtering" IEEE TRANSACTIONS ON SIGNAL PROCESSING, IEEE SERVICE CENTER, NEW YORK, NY, US LNKD- DOI:10.1109/TSP.2003.811222, vol. 51, no. 6, 1 June 2003 (2003-06-01), pages 1557-1571, XP011096653 ISSN: 1053-587X**
- **TRAN T D ET AL: "Lapped Transform Based Video Coding" PROCEEDINGS OF THE INTERNATIONAL SOCIETY FOR OPTICAL ENGINEERING (SPIE), SPIE, USA LNKD- DOI:10.1117/12.449795, vol. 4472, 1 August 2001 (2001-08-01), pages 319-333, XP003004108 ISSN: 0277-786X**
- **LIST P ET AL: "Adaptive deblocking filter" IEEE TRANSACTIONS ON CIRCUITS AND SYSTEMS FOR VIDEO TECHNOLOGY, IEEE SERVICE CENTER, PISCATAWAY, NJ, US LNKD- DOI:10.1109/TCSVT.2003.815175, vol. 13, no. 7, 1 July 2003 (2003-07-01), pages 614-619, XP011221094 ISSN: 1051-8215**
- **MURAMATSU S ET AL: "The two-dimensional lapped Hadamard transform" CIRCUITS AND SYSTEMS, 1998. ISCAS '98. PROCEEDINGS OF THE 1998 IEEE IN TERNATIONAL SYMPOSIUM ON MONTEREY, CA, USA 31 MAY-3 JUNE 1998, NEW YORK, NY, USA,IEEE, US LNKD- DOI:10.1109/ISCAS.1998.694414, vol. 5, 31 May 1998 (1998-05-31), pages 86-89, XP010289965 ISBN: 978-0-7803-4455-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 684 521 B1

- XU HUI ET AL: "An integer hierarchy lapped biorthogonal transform via lifting steps and application in image coding" SIGNAL PROCESSING, 2002 6TH INTERNATIONAL CONFERENCE ON AUG. 26-30, 2002, PISCATAWAY, NJ, USA,IEEE, vol. 1, 26 August 2002 (2002-08-26), pages 664-667, XP010628075 ISBN: 978-0-7803-7488-1
- CHENG L Z ET AL: "New family of lapped biorthogonal transform via lifting steps" IEE PROCEEDINGS: VISION, IMAGE AND SIGNAL PROCESSING, INSTITUTION OF ELECTRICAL ENGINEERS, GB LNKD-DOI:10.1049/IP-VIS:20020132, vol. 149, no. 2, 22 April 2002 (2002-04-22), pages 91-96, XP006018093 ISSN: 1350-245X

## Description

### Technical Field

The invention relates generally to digital media (e.g., video and image) compression using lapped transforms.

### Background

### Lapped Transforms

The *lapped transform* is a powerful signal processing technique that is used in data compression. *See, e.g.,* H. S. Malvar, Signal Processing with Lapped Transforms. Boston, MA: Artech House, 1992. However, to date, efficient lapped transforms with linear phase have neither been formulated nor been applied for lossless (reversible) compression of data.

As discussed in more detail below, it is known that a lapped transform can be formulated as a pre filterfollowed by a data transform (and its inverse as the inverse data transform followed by a post filter). *See, e.g.,* H. S. Malvar, "A pre- and post-filtering technique for the reduction of blocking effects," in Proc. Picture Coding Symposium, Stockholm, Sweden, Jun. 1987; and T.D. Tran, J. Liang, and C. Tu, "Lapped Transform via Time-Domain Pre- and Post-Filtering", IEEE Trans. on Signal Processing, vol.51, no.6, June 2003. A lossless data transform can be used in this formulation to achieve a good measure of reversibility. So far, it was believed that only a certain restricted variety of pre and post filters could be chosen for reversibility. This restricted set is very limited in its compression (rate vs. distortion, or R-D) performance. In a recent article (W. Dai and T. Tran, "Regularity-constrained pre- and post-filtering for block DCT-based systems,"IEEE Trans. on Signal Processing,vol. 5 1, pp. 2568-2581, Oct. 2003), a construction in which most elements are reversible and which has good compression properties was presented.

In audio compression, several constructions for reversible lapped transforms were introduced.See, e.g.,R. Geiger, J. Herre, J. Koller, and K. Brandenburg, "IntMDCT - A link between perceptual and lossless audio coding," inProc. IEEE Int. Conf. on Acoustics, Speech, and Signal Processing,Orlando, FL, May 2002; and J. Li, "Reversible FFT And MDCT Via Matrix Lifting." inProc. IEEE Int. Conf. on Acoustics, Speech, and Signal Processing,Montreal, Canada, May 2004. However, these constructions are applicable only to the modulated lapped transform (MLT), also known as modified discrete cosine transform (MDCT), whose basis functions are orthogonal and are not symmetric (that is, the basis functions are not linear phase). These transforms are not applicable to data compression applications where linear phase (symmetric) functions are required, such as in digital picture compression.

For picture (image) compression, one of the best-performing transforms in terms of R-D performance is the lapped biorthogonal transform (LBT). See, H. S. Malvar, "Biorthogonal And Nonuniform Lapped Transforms For Transform Coding With Reduced Blocking And Ringing Artifacts,"IEEE Trans. on Signal Processing,vol. 46, pp. 1043-1053, Apr. 1998. Unlike the MLT, the LBT basis functions are symmetric, and are not exactly orthogonal (in the LBT, the analysis basis functions are orthogonal to the synthesis basis functions, hence the term biorthogonal). LBTs have been successfully used in image compression applications, but they have not yet been used in lossless image compression, because integer-reversible constructions were not known.

"TRAN T D ET AL: 'Lapped Transform Based Video Coding' PROCEEDINGS OF THE INTERNATIONAL SOCIETY FOR OPTICAL ENGINEERING (SPIE), SPIE, USA LNKD-DOI: 10.117/12449795, vol. 4472, 1. August 2001, pages 319-333" discloses a framework of constructing lapped transforms and combining these with pre-/post-processing modules. The framework is used for image and video compression.

"MURAMATSU S ET AL: 'The two-dimensional lapped Hadamard transform' CIRCUITS AND SYSTEMS; 1998; ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA, IEEE, US LNKD- DOI: 10.1109/ISCAS. 1998.694414, vol. 5, 31 May 1998, pages 86-89" discloses a two-dimensional lapped Hadamard transform.

The problem underlying the invention is improving the efficiency of encoding and decoding of image data based on a lapped transform. This problem is solved according to the appended claims.

### Overview of Block Transform-Based Coding

Transform coding is a compression technique used in many audio, image and video compression systems. Uncompressed digital image and video is typically represented or captured as samples of picture elements or colors at locations in an image or video frame arranged in a two-dimensional (2D) grid. This is referred to as a spatial-domain representation of the image or video. For example, a typical format for images consists of a stream of 24-bit color picture element samples arranged as a grid. Each sample is a number representing color components at a pixel location in the grid within a color space, such as RGB, or YIQ, among others. Various image and video systems may use various different color, spatial and time resolutions of sampling. Similarly, digital audio is typically represented as time-sampled audio signal stream. For example, a typical audio format consists of a stream of 16-bit amplitude samples of an audio signal taken at regular time intervals.

Uncompressed digital audio, image and video signals can consume considerable storage and transmission capacity. Transform coding reduces the size of digital audio, images and video by transforming the spatial-domain representation of the signal into a frequency-domain (or other like transform domain) representation, and then reducing resolution of certain generally less perceptible frequency components of the transform-domain representation. This generally produces much less perceptible degradation of the digital signal compared to reducing color or spatial resolution of images or video in the spatial domain, or of audio in the time domain.

More specifically, a typical block transform-based codec 100 shown in Figure 1 divides the uncompressed digital image's pixels into fixed-size two dimensional blocks ($X_1$, ... $X_n$), each block possibly overlapping with other blocks. A linear transform 120-121 that does spatial-frequency analysis is applied to each block, which converts the spaced samples within the block to a set of frequency (or transform) coefficients generally representing the strength of the digital signal in corresponding frequency bands over the block interval. For compression, the transform coefficients may be selectively quantized 130 (i.e., reduced in resolution, such as by dropping least significant bits of the coefficient values or otherwise mapping values in a higher resolution number set to a lower resolution), and also entropy or variable-length coded 130 into a compressed data stream. At decoding, the transform coefficients will inversely transform 170-171 to nearly reconstruct the original color/spatial sampled image/video signal (reconstructed blocks $\hat{X}_1$, ... $\hat{X}_n$).

The block transform 120-121 can be defined as a mathematical operation on a vector *x* of size *N*. Most often, the operation is a linear multiplication, producing the transform domain output $y = Mx$, $M$ being the transform matrix. When the input data is arbitrarily long, it is segmented into *N* sized vectors and a block transform is applied to each segment. For the purpose of data compression, reversible block transforms are chosen. In other words, the matrix *M* is invertible. In multiple dimensions (e.g., for image and video), block transforms are typically implemented as separable operations. The matrix multiplication is applied separably along each dimension of the data (i.e., both rows and columns).

For compression, the transform coefficients (components of vector y) maybe selectively quantized (i.e., reduced in resolution, such as by dropping least significant bits of the coefficient values or otherwise mapping values in a higher resolution number set to a lower resolution), and also entropy or variable-length coded into a compressed data stream.

At decoding in the decoder 150, the inverse of these operations (dequantization/entropy decoding 160 and inverse block transform 170-171) are applied on the decoder 150 side, as show in Fig. 1. While reconstructing the data, the inverse matrix $M^{-1}$ (inverse transform 170-171) is applied as a multiplier to the transform domain data. When applied to the transform domain data, the inverse transform nearly reconstructs the original time-domain or spatial-domain digital media.

In many block transform-based coding applications, the transform is desirably reversible to support both lossy and lossless compression depending on the quantization factor. With no quantization (generally represented as a quantization factor of 1) for example, a codec utilizing a reversible transform can exactly reproduce the input data at decoding. However, the requirement of reversibility in these applications constrains the choice of transforms upon which the codec can be designed.

Many image and video compression systems, such as MPEG and Windows Media, among others, utilize transforms based on the Discrete Cosine Transform (DCT). The DCT is known to have favorable energy compaction properties that result in near-optimal data compression. In these compression systems, the inverse DCT (IDCT) is employed in the reconstruction loops in both the encoder and the decoder of the compression system for reconstructing individual image blocks. The DCT is described by N. Ahmed, T. Natarajan, and K.R. Rao, "Discrete Cosine Transform," IEEE Transactions on Computers, C-23 (January 1974), pp. 90-93. An exemplary implementation of the IDCT is described in "IEEE Standard Specification for the Implementations of 8x8 Inverse Discrete Cosine Transform," IEEE Std. 1180-1990, December 6, 1990.

While compressing a still image (or an intra coded frame in a video sequence), most common standards such as MPEG-2, MPEG-4 and Windows Media partition the image into square tiles and apply a block transform to each image tile. The transform coefficients in a given partition (commonly known as block) are influenced only by the raw data components within the block. Irreversible or lossy operations on the encoder side such as quantization cause artifacts to appear in the decoded image. These artifacts are independent across blocks and produce a visually annoying effect known as the blocking effect. Likewise for audio data, when non-overlapping blocks are independently transform coded, quantization errors will produce discontinuities in the signal at the block boundaries upon reconstruction of the audio signal at the decoder. For audio, a periodic clicking effect is heard.

Several techniques are used to combat the blocking effect - the most popular among these are the deblocking filter that smoothes inter block edge boundaries, and spatial extrapolation that encodes differences between the raw input data and a prediction from neighboring block edges. These techniques are not without their flaws. For instance, the deblocking filter approach is "open loop", i.e. the forward transform process does not take into account the fact that deblocking is going to be performed prior to reconstruction on the decoder side. Besides, both these techniques are computationally expensive.

In order to minimize the blocking effect, cross block correlations can be exploited. One way of achieving cross block correlation is by using a lapped transform as described in H. Malvar, "Signal Processing with Lapped Transforms," Artech House, Norwood MA, 1992. A lapped transform is a transform whose input spans, besides the data elements in the current block, a few adjacent elements in neighboring blocks. Likewise, on the reconstruction side the inverse transform influences all data points in the current block as well as a few data points in neighboring blocks.

For the case of 2-dimensional (2D) data, the lapped 2D transform is a function of the current block, together with select elements of blocks to the left, top, right, bottom and possibly top-left, top-right, bottom-left and bottom-right. The number of data points in neighboring blocks that are used to compute the current transform is referred to as the overlap.

### Overview Of The Spatial Domain Lapped Transform

The lapped transform can be implemented in the transform domain, as a step that merges transform domain quantities after a conventional block transform. Else, it can be implemented in the spatial-domain by a pre-processing stage that is applied to pixels within the range of overlap. These two implementations are mathematically related and therefore equivalent.

Figure 2 shows an example of a conventional spatial-domain lapped transform. In the example shown, the overlap is 2 pixels, and two pixels each from the two adjacent blocks shown are pre-processed in pre-processing stage 210. Two pre-processed outputs are sent to each of the blocks for block transform-based coding by codec 100 as in Fig. 1. An inverse of the pre-processing stage is applied at post-processing stage 220 after decoding. With a judicious choice of pre-processing and block transform, a wide range of lapped transforms can be realized.

A key advantage of the spatial domain realization of the lapped transform is that an existing block transform-based codec can be retrofitted with a pre- and post-processing stage to derive the benefits of the lapped transform, i.e., reduced block effect and better compression, using an existing codec framework. Pre-processing 210 and post-processing can be represented as a matrix multiplication as shown in Fig. 3. Conventionally, the pre-processing and post-processing matrices are inverses of each other, i.e., pre-processing matrix ($P_f$) and the inverse or post-processing matrix ($P_i$) multiplied together equal the identity matrix $I$.

### Definitions

In general, the *length N* of a transform is the number of transform coefficients in a certain transform block.

The *support K* of a transform is the number of input data points that influence coefficients of the transform block. Likewise, it is the number of output data points that are influenced by each transform coefficient, by the process of inverse transformation.

For typical block transforms such as the discrete cosine transform (DCT), the length and support are identical. However, lapped transforms (LTs) are an important class of transforms for which the support $K$ is greater than the length $N$. The notation $K \times N$ is used to denote the support and length of a lapped transform. (Transforms for which $K < N$ are expansive and therefore not used in data compression)

As an example 300, a 6x4 LT 310 shown in Figure 3 is a transform with six inputs and four outputs. Since the transform is invertible, two of the inputs are shared with adjacent transform blocks. The inverse lapped transform (ILT) 320 produces six outputs from its four inputs. Output data points near the block boundary (in this case one point at each end of the block) are reconstructed by summing the corresponding responses of two adjacent inverse transform blocks.

### Constraints On Lapped Transforms Used In Compression Systems

In the mathematical sense, lapped transforms are invertible structures, when we consider the input and output signals, as well as intermediate computation results, as real numbers. If infinite precision could be achieved, the input data could be perfectly recovered from its lapped transform coefficients. However, infinite precision is not possible in practice; for lossless compression of data, the requirement is to design a transform that operates on integer or fixed-precision arithmetic, yet perfectly reconstructs the data given the integer representation of transform coefficients. This is a stronger condition than mathematical invertibility, and such a transform is referred to here as a "lossless" transform. Moreover, it is required that the lossless transform be efficient for data compression (both lossless and lossy) as well. That efficiency can be measured by the entropy of the transformed data; the lower that entropy, the more the transformed data can be compressed by standard entropy coding techniques, such as context-based arithmetic coding or adaptive run-length coding.

## Summary

Various Realizations are described herein of an efficient lapped transform that is reversible in integer arithmetic, and can be used as the basis of an efficient and lossless data compression/decompression system.

It can be shown that the most efficient lossless transform designs (that is, those with minimum entropy of the transformed data) require the transform matrix be unit determinant (i.e., the determinant of the transform matrix is ±1). In the following description, it is assumed that the transform can be represented as a matrix multiplication, although it is recognized that there may be minor nonlinear phenomena such as data rounding. Thus, when we refer to the determinant, truncation or rounding aspects are not considered.

The efficient lapped transform is realized using pre- and post-filters that are referred to herein as "overlap operators". This realization is reversible, yet very R-D efficient. Among other applications, these new overlap operators allow the implementation of reversible LBTs, which can be used for lossless image compression. The pre- and post-filters use reversible operations. Further, the described overlap operators include simplifications for computational efficiency.

One realization of the pre and post filtering operation uses a 1-dimensional reversible overlap operator that is structured of unit determinant component matrices. More specifically, the reversible overlap operator is realized as a succession of planar rotational transforms and unit determinant planar scaling transforms. The planar scaling transforms can be implemented using planar shears or lifting steps. Further, the planar rotations and planar shears have an implementation as reversible/lossless operations, giving as a result, a reversible overlap operator.

An exemplary application is in an 8x4 one-dimensional lapped transform realized using computationally efficient approximations of the reversible overlap operators.

For a two dimensional lapped transform, this one-dimensional realization of the overlap operator can be applied separably to the horizontal rows of a block of digital media data, followed by applying the one-dimensional operator to the vertical columns of the data. This approach has several drawbacks, most severe of which are:

1. The difficulty / near-impossibility of obtaining a normalized pre/post filter for efficient data compression,
2. The high degree of complexity if such an approximation can be achieved, and
3. The inaccuracy due to multiple filtering / lifting steps when such an approximation is implemented.

An alternative implementation of the two-dimensional lapped transform described herein achieves better computational efficiency than the approach of separably horizontally and vertically applying the one-dimensional overlap operator. This alternative implementation separates the one-dimensional overlap operator into stages, and intersperses the stages of the horizontal and vertical application of the overlap operator. Within each stage, a normalized scaling operation implemented in lifting steps can be applied to more limited subsets of the data block (e.g., 2x2 subsets or signal pairs of a 4x4 data block) by noting cancellation of "cross terms" in the interspersed 2-dimensional structure. This results in an efficient scale-free reversible 2D pre/post filter.

The 2D pre/post filter can be combined with a reversible transform, such as the efficient scale-free reversible 2D block transform described by Srinivasan, U.S. Patent Application No. 11/015,707, entitled "Reversible Transform For Lossy And Lossless 2-D Data Compression," filed on December 17, 2004 (the disclosure of which is hereby incorporated herein by reference). The combined pre/post filter and transform forms a lapped transform that may be used for effective and computationally efficient compression of images and video, both lossless and lossy.

Additional features and advantages of the invention will be made apparent from the following detailed description of embodiments that proceeds with reference to the accompanying drawings.

## Brief Description Of The Drawings

Figure 1 is a block diagram of a conventional block transform-based codec in the prior art.
Figure 2 is a block diagram of a spatial-domain lapped transform implemented as pre and post processing operations in combination with the block transform-based codec of Figure 1, also in the prior art.
Figure 3 is a block diagram illustrating a lapped transform and inverse lapped transform pair on 1-dimensional data.
Figure 4 is a flow diagram of an encoder based on a lapped transform utilizing a reversible overlap operator.
Figure 5 is a flow diagram of a decoder based on the lapped transform.
Figure 6 is a block diagram illustrating a lapped transform and inverse lapped transform pair on 1-dimensional data using pre- and post-filtering operations (or reversible overlap operator) in conjunction with a block transform.
Figure 7 is a signal flow graph illustrating a structure of a linear phase pre- (or post-) filter for use as the reversible overlap operator in the lapped transform of Figure 6.

Figure 8 is a signal flow graph of lossless scaling as four lifting steps for use in the reversible overlap operator.

Figure 9 is a signal flow graph of lossless scaling as five lifting steps for use in the reversible overlap operator.

Figure 10 is a signal flow graph of a cascade of 2-point scaling applied to a larger dimension matrix to realize lossless unit determinant scaling.

Figure 11 is a signal flow graph of a reversible overlap operator (or pre-/post-filter) having the structure shown in Figure 7 and using the lossless unit determinant scaling of Figure 10.

Figure 12 is a flow chart of the operation of the reversible overlap operator of Figure 11.

Figure 13 is a signal flow graph illustrating an example of a reversible lapped transform implementation using the reversible overlap operator of Figure 11.

Figure 14 is an impulse response graph of the DC coefficient of the example lapped transform of Figure 13.

Figure 15 is a diagram illustrating pixels used as support of a 2-dimensional overlap operator for 4x4 size blocks.

Figure 16 is a diagram illustrating pixels used as support of a 2-dimensional overlap operator for 2x2 size blocks.

Figure 17 is a flow chart of the transform applied on the encoder-side by the encoder of Figure 4.

Figure 18 is a flow chart of the transform applied on the decoder-side by the decoder of Figure 5.

Figure 19 is a signal flow graph providing a canonical representation of the one-dimensional reversible overlap operator shown in Figure 11

Figure 20 is a signal flow graph illustrating a two-dimensional pre/post-filter for a lapped transform implemented by separably applying the one-dimensional reversible overlap operator of Figure 19, horizontally and vertically.

Figure 21 is a signal flow graph illustrating a two-dimensional pre/post-filter for a lapped transform implemented by interleaving horizontal and vertical operations of the two-dimensional filter in stages.

Figure 22 is a program listing in the C programming language for realizing a normalized 2x2 Hadamard operator that forms part of the two-dimensional pre/post-filter of Figure 21.

Figure 23 is a diagram showing the correspondence between data points processed with the 2x2 pre/post-filter.

Figure 24 is a diagram illustrating the data points of a 4x4 data block to which the 2x2 Hadamard operator is applied in a first stage of the implementation of the 4x4 two-dimensional pre/post-filter of Figure 21.

Figure 25 is a program listing in the C programming language for realizing a forward rotation that forms part of the two-dimensional pre-filter of Figure 21.

Figure 26 is a program listing in the C programming language for realizing an inverse rotation that forms part of the two-dimensional post-filter of Figure 21.

Figure 27 is a program listing in the C programming language for realizing a forward 2-point rotation that forms part of the two-dimensional pre-filter of Figure 21.

Figure 28 is a program listing in the C programming language for realizing an inverse 2-point rotation that forms part of the two-dimensional post-filter of Figure 21.

Figure 29 is a diagram illustrating the data points of a 4x4 data block to which the rotations of Figures 25-28 are applied in another stage of the implementation of the 4x4 two-dimensional pre/post-filter of Figure 21.

Figure 30 is a diagram illustrating the data points of a 4x4 data block to which 2-point scaling operations are applied in a further stage of the implementation of the 4x4 two-dimensional pre/post-filter of Figure 21.

Figure 31 is a program listing in the C programming language for realizing a forward scaling that forms part of the two-dimensional pre-filter of Figure 21.

Figure 32 is a program listing in the C programming language for realizing an inverse scaling that forms part of the two-dimensional post-filter of Figure 21.

Figure 33 is a program listing in the C programming language for realizing the two-dimensional 4x4 pre-filter of Figure 21.

Figure 34 is a program listing in the C programming language for realizing the two-dimensional 4x4 post-filter of Figure 21.

Figure 35 is a program listing in the C programming language for realizing the two-dimensional 2x2 pre-filter.

Figure 36 is a program listing in the C programming language for realizing the two-dimensional 2x2 post-filter.

Figure 37 is a program listing in the C programming language for realizing a one-dimensional 2-point pre-filter for applying at image edges having insufficient data points for the two-dimensional pre-filter of Figure 35.

Figure 38 is a program listing in the C programming language for realizing a one-dimensional 2-point post-filter for applying at image edges having insufficient data points for the two-dimensional pre-filter of Figure 36.

Figure 39 is a program listing in the C programming language for realizing a one-dimensional 4-point pre-filter for applying at image edges having insufficient data points for the two-dimensional pre-filter of Figure 33.

Figure 40 is a program listing in the C programming language for realizing a one-dimensional 4-point post-filter for applying at image edges having insufficient data points for the two-dimensional pre-filter of Figure 34.

Figure 41 is a program listing in the C programming language for realizing a forward transform used in combination with the pre-filter of Figure 21 to effect a lapped transform in the encoder of Figure 4.

Figure 42 is a program listing in the C programming language for realizing a transform that forms part of the forward transform of Figure 41.

Figure 43 is a program listing in the C programming language for realizing another transform that forms part of the forward transform of Figure 41.

Figure 44 is a program listing in the C programming language for realizing an inverse transform used in combination with the post-filter of Figure 21 to effect an inverse lapped transform in the decoder of Figure 5.

Figure 45 is a program listing in the C programming language for realizing a transform that forms part of the inverse transform of Figure 44.

Figure 46 is a program listing in the C programming language for realizing another transform that forms part of the inverse transform of Figure44.

Figure 47 is a block diagram of a suitable computing environment for implementing the block transform-based codec with improved spatial-domain lapped transform of Figures 4 and 5.

**Detailed Description**

The following description relates to a digital media compression system or codec, which utilizes a reversible 2-dimensional pre-/post-filtering for a lapped transform. For purposes of illustration, an embodiment of a compression system incorporating this 2-dimensional pre-/post-filtering is an image or video compression system. Alternatively, the reversible overlap operator also can be incorporated into compression systems or codecs for other 2D data. The reversible overlap operator does not require that the digital media compression system encodes the compressed digital media data in a particular coding format.

**1. Encoder/Decoder**

Figures 4 and 5 are a generalized diagram of the processes employed in a representative 2-dimensional (2D) data encoder 400 and decoder 500 based on a lapped transform using the reversible overlap operator. The diagrams present a generalized or simplified illustration of the use and application of this reversible overlap operator in a compression system incorporating the 2D data encoder and decoder. In alternative encoders based on this reversible overlap operator, additional or fewer processes than those illustrated in this representative encoder and decoder can be used for the 2D data compression. For example, some encoders/decoders may also include color conversion, color formats, scalable coding, lossless coding, macroblock modes, etc. The compression system (encoder and decoder) can provide lossless and/or lossy compression of the 2D data, depending on the quantization which may be based on a quantization parameter varying from lossless to lossy.

The 2D data encoder 400 produces a compressed bitstream 420 that is a more compact representation (for typical input) of 2D data 410 presented as input to the encoder. For example, the 2D data input can be an image, a frame of a video sequence, or other data having two dimensions. The 2D data encoder tiles 430 the input data into macroblocks, which are 16×16 pixels in size in this representative encoder. The 2D data encoder further tiles each macroblock into 4x4 blocks 432. A "forward overlap" operator 440 is applied to each edge between blocks, after which each 4x4 block is transformed using a block transform 450. This block transform 450 can be the reversible, scale-free 2D transform described by Srinivasan, U.S. Patent Application No. 11/015,707, entitled, "Reversible Transform For Lossy And Lossless 2-D Data Compression," filed December 17, 2004, the disclosure of which is hereby incorporated by reference. Alternatively, the discrete cosine transform or other block transforms can be used with the reversible overlap operator described herein. Subsequent to the transform, the DC coefficient 460 of each 4x4 transform block is subject to a similar processing chain (tiling, forward overlap, followed by 4x4 block transform). The resulting DC transform coefficients and the AC transform coefficients are quantized 470, entropy coded 480 and packetized 490.

The decoder performs the reverse process. On the decoder side, the transform coefficient bits are extracted 510 from their respective packets, from which the coefficients are themselves decoded 520 and dequantized 530. The DC coefficients 540 are regenerated by applying an inverse transform, and the plane of DC coefficients is "inverse overlapped" using a suitable smoothing operator applied across the DC block edges. Subsequently, the entire data is regenerated by applying the 4x4 inverse transform 550 to the DC coefficients, and the AC coefficients 542 decoded from the bitstream. Finally, the block edges in the resulting image planes are inverse overlap filtered 560. This produces a reconstructed 2D data output.

In an exemplary implementation, the encoder 400 (Figure 4) compresses an input image into the compressed bitstream 420 (e.g., a file), and the decoder 500 (Figure 5) reconstructs the original input or an approximation thereof, based on whether lossless or lossy coding is employed. The process of encoding involves the application of a forward lapped transform (LT) discussed below, which is implemented with reversible 2-dimensional pre-/post-filtering also described more fully below. The decoding process involves the application of the inverse lapped transform (ILT) using the reversible 2-dimensional pre-/post-filtering.

The illustrated LT and the ILT are inverses of each other, in an exact sense, and therefore can be collectively referred to as a reversible lapped transform. As a reversible transform, the LT/ILT pair can be used for lossless image compression.

The input data 410 compressed by the illustrated encoder 400/decoder 500 can be images of various color formats (e.g., RGB/YUV4:4:4 or YUV4:2:0 color image formats). Typically, the input image always has a luminance (Y) component. If it is a RGB/YUV4:4:4 or YUV4:2:0 image, the image also has chrominance components, such as a U component and a V component. The separate color planes or components of the image can have different spatial resolutions. In case of an input image in the YUV 4:2:0 color format for example, the U and V components have half of the width and height of the Y component.

As discussed above, the encoder 400 tiles the input image or picture into macroblocks. In an exemplary implementation, the encoder 400 tiles the input image into 16x16 macroblocks in the Y channel (which may be 16x16 or 8x8 areas in the U and V channels depending on the color format). Each macroblock color plane is tiled into 4x4 regions or blocks. Therefore, a macroblock is composed for the various color formats in the following manner for this exemplary encoder implementation:

1. For a grayscale image, each macroblock contains 16 4x4 luminance (Y) blocks.
2. For a YUV4:2:0 format color image, each macroblock contains 16 4x4 Y blocks, and 4 each 4x4 chrominance (U and V) blocks.
3. For a RGB or YUV4:4:4 color image, each macroblock contains 16 blocks each of Y, U and V channels.

### 2. Lapped Transform Realized Using Overlap Operators

More generally, the overlap operator 440 and block transform 450 of the encoder 400 (Figure 4) is an example of a large class of lapped transforms 600 that can be factorized into a pre filtering operation 610, followed by a block data transform 620 as illustrated in Figure 6. Figure 6 illustrates a generalized example of such factorized lapped transforms. In this illustrated case, the 6x4 lapped transform 310 shown in Figure 3 is factorized into pre-filter operation 610 and block transform 620 stages. The pre filtering operation 610 and block transform 620 are evenly staggered over the data points. In this illustrated 6x4 lapped transform 600 example, each pre filter is a length 2 transformation of the data points straddling adjacent blocks. On the decode side, a post filter 640 is applied after the inverse block transform 630 across block boundaries. Likewise, for the general $K \times N$ case, the pre filter is applied to the $(K-N)/2$ data points of each block adjacent to a block boundary.

For invertibility, the pre-filter 610 and post filter 640 are inverses of each other. For realizing a lossless lapped transform, however, this condition is not sufficient. This further constrains the pre and post filters 610, 640 to be lossless transforms as well, in addition to the block (core) transform 620 to be realized in a lossless manner. The DCT can be realized in a lossless manner, using ladder, lattice-, or lifting-based methods, among others. *See, e.g.,* A. A. M. L. Bruekens and A. W. M. van den Enden, "New networks for perfect inversion and perfect reconstruction", IEEE J. Selected Areas Communications, vol.10, no.1, 1992; and I. Daubechies and W. Sweldens, "Factoring wavelet transform into lifting steps", J. Fourier Anal. Appl., vol. 4, pp. 247-269, 1998. A reversible, scale-free 2-dimensional transform also is described by Srinivasan, U.S. Patent Application No. 11/015,707, entitled, "Reversible Transform For Lossy And Lossless 2-D Data Compression," filed December 17, 2004 and incorporated by reference herein. Lifting-based reversible approximations to the DCT in one dimension also are known. *See, e.g.,* J. Liang and T. D. Tran, "Fast Multiplierless Approximations Of The DCT With The Lifting Scheme," IEEE Trans. Signal Processing, vol. 49, pp. 3032-3044, Dec. 2001.

Efficient reversibility further requires that both steps, viz. the pre/post filter and the block transform, be unit determinant.

### 3. Reversible Overlap Operator

An efficient reversible overlap operator for use as the pre-filter 610 (Figure 6) of the lossless lapped transform 600 on which the encoder 400/decoder 500 (Figures 4 and 5) is based can be realized as a linear phase pre-filter, which is factorized into the structure 700 shown in Figure 7. An inverse of this pre-filter (i.e., the post-filter 640) also has the same structure but with different coefficients.

This linear phase filter structure 700 has multiple orthogonal components, including a cross-over Hadamard network 710 at its input and output. The internal arrows in the illustrated Hadamard network 710 denote negation in this diagram. The structure 700 further includes orthogonal matrices U1, U2, V1 and V2. These components can be implemented in a lossless manner by using lattice/lifting based methods.

In addition, the structure 700 has the nonzero scale factors $s_1$ through $s_M$. The unit determinant constraint implies that $\prod_i s_i = \pm 1$. When all scale factors are $\pm 1$, the pre/post filters can be realized as a lossless transform where the component matrices U1, U2, V1 and V2 are implemented as lossless lattice/lifting steps. However, when scale factors are not all ±1, the lossless realization remains a challenge that is addressed as discussed more fully below.

With this linear phase pre-filter structure 700, the problem of realizing a lossless pre-/post-filter pair is reduced to the following three steps:

1. Decomposing the filter F into the following form, for orthogonal matrices U1, U2, V1 and V2:

$$F = \begin{pmatrix} I & J \\ J/2 & -I/2 \end{pmatrix} \begin{pmatrix} U_1 & 0 \\ 0 & V_1 \end{pmatrix} \begin{pmatrix} s_1 & & & \\ & s_2 & & \\ & & \ddots & \\ & & & s_M \end{pmatrix} \begin{pmatrix} U_2 & 0 \\ 0 & V_2 \end{pmatrix} \begin{pmatrix} I/2 & J \\ J/2 & -I \end{pmatrix} \qquad (1)$$

where *I* is the identity matrix and $J = \begin{pmatrix} 0 & & 0 & 1 \\ 0 & & 1 & 0 \\ 0 & \cdot^{\cdot^{\cdot}} & & \\ 1 & & 0 & 0 \end{pmatrix}$;

2. Deriving lossless realizations for U1, U2, V1 and V2; and
3. Deriving a lossless realization for the scaling matrix.

As to step 1, the first and last matrices on the right hand side, which define 2 point Hadamard transforms, incorporate the factor of ½ in some terms to make these stages unit determinant. The rest is re-arranged to a block diagonal form with two blocks, each of half the linear dimensions of F. The singular value decomposition or SVD of each block provides the orthogonal matrices U1, U2, V1 and V2, as well as the scales.

The lossless realizations of the component matrices can be derived in Step 2 using standard lifting-based techniques, such as those described by A. A. M. L. Bruekens and A. W. M. van den Enden, "New networks for perfect inversion and perfect reconstruction", IEEE J. Selected Areas Communications, vol.10, no.1, 1992.

The lossless realization of the scaling matrix in Step 3 is addressed as follows. For simplicity, let us assume that we have a certain 2 input 2 output component that is (a) lossless and (b) realizes scaling by *s* ($0 < s < 1$) for the first component and by 1/*s* for the second component (other cases can be obtained by reverting the sign of one or both output signals). In other words, we have the input-output relationship given by

$$y = \begin{pmatrix} s & 0 \\ 0 & 1/s \end{pmatrix} x \qquad (2)$$

The determinant of the transformation matrix in equation (2) is *s*/*s* = 1. This matrix can be realized in four lifting steps procedure 800 or five lifting steps procedure 900 as shown in Figures 8 and 9. We usually approximate all the lifting steps in the form of y = (a.x + r) >> b, where x is the input and y is the output, and a, b, and r are integers and r is used for rounding error control, to get a division-less integer implementation. The transform defined by equation (2) is referred to here as the *unit determinant scaling transform,* abbreviated as the *scaling transform.*

Interestingly, the scaling transform is closely related with the shear operation, as defined below:

$$y = \begin{pmatrix} a & b \\ b & a \end{pmatrix} x \qquad (3)$$

Under the constraint $a^2 - b^2 = 1$ (a > 0, b ≥ 0), the shear operation has unit determinant and can be realized with three lifting steps:

$$\begin{pmatrix} a & b \\ b & a \end{pmatrix} = \begin{pmatrix} 1 & \sqrt{\frac{a-1}{a+1}} \\ 0 & 1 \end{pmatrix} \begin{pmatrix} 1 & 0 \\ b & 1 \end{pmatrix} \begin{pmatrix} 1 & \sqrt{\frac{a-1}{a+1}} \\ 0 & 1 \end{pmatrix}, \quad (4)$$

Therefore,

$$\begin{bmatrix} a+b & 0 \\ 0 & a-b \end{bmatrix} = \begin{bmatrix} 1 & 1/2 \\ -1 & 1/2 \end{bmatrix} \begin{bmatrix} 1/2 & 0 \\ 0 & 1 \end{bmatrix} \begin{bmatrix} a & b \\ b & a \end{bmatrix} \begin{bmatrix} 2 & 0 \\ 0 & 1 \end{bmatrix} \begin{bmatrix} 1/2 & -1/2 \\ 1 & 1 \end{bmatrix}$$
$$= \begin{bmatrix} 1 & 0 \\ -1 & 1 \end{bmatrix} \begin{bmatrix} 1 & \frac{1}{2}\left(\sqrt{\frac{a-1}{a+1}}+1\right) \\ 0 & 1 \end{bmatrix} \begin{bmatrix} 1 & 0 \\ 2b & 1 \end{bmatrix} \begin{bmatrix} 1 & \frac{1}{2}\left(\sqrt{\frac{a-1}{a+1}}-1\right) \\ 0 & 1 \end{bmatrix} \begin{bmatrix} 1 & 0 \\ 1 & 1 \end{bmatrix} \quad (5)$$

Here the scaling factors ½ and 2 in the matrices sandwiching the shear matrix are distributed to the shear lifting steps, and the last lifting step of the first matrix is combined with the first shear lifting step while the first lifting step of the last matrix is combined with the first shear lifting step. The five step realization as procedure 900 of the scaling transform shown in Figure 9 is based on equation (5). Simplifications to the structure may be possible by canceling inverse operations, where possible, between the 3 groups in equation (1), viz the Hadamard networks, the orthogonal matrices, and the scaling operations (which may in turn be decomposed into Hadamard and shear operations).

More particularly, the effective transform matrix of the four lifting step realization of lossless scaling as procedure 800 is $T = \begin{pmatrix} c^{-2} & 0 \\ 0 & c^2 \end{pmatrix}$, where $c^2 = 1 - s^2$. On the other hand, the effective transform matrix of the five lifting step realization in procedure 900 is $T = \begin{pmatrix} \frac{1+s}{c} & 0 \\ 0 & \frac{1-s}{c} \end{pmatrix}$, where $c^2 = 1 - s^2$.

Although the scaling procedure 800 shown in Figure 8 has one fewer lifting step than the one in Figure 9, the latter procedure 900 has only three non-trivial lifting steps as opposed to four in the former. For the reason stated in the above paragraph, the first or last trivial lifting step in Figure 9 may be merged with prior or subsequent transform steps (for instance, with the Hadamard network 710 at either end of Figure 7) under certain conditions (for instance when U1, U2 and V1 are identities).

The scaling procedure can be easily extended to larger matrices. This is illustrated in Figure 10, where M possibly different scale factors $s_1$ through $s_M$ are applied to the *M* data paths as a cascade 1000 of scaling transforms. In order to achieve this in a reversible manner, *M* - 1 reversible scaling transforms are needed in general.

One useful special case is when the *M* scale factors $s_1$ through $s_M$ can be grouped into *M/2* groups of form ($s$, $1/s$). In this case, only *M/2* reversible scaling transforms are needed. One example is $s_1 = s_2 = \ldots = s_{M/2} = s$ and $s_{M/2+1} = s_{M/2+2} = \ldots = s_M = 1/s$. A preferred way of grouping is to maintain symmetry across the central axis, in other words each group scales the coefficients $s_i$ and $s_{M+1-i}$. If *M* is odd, the one scale factor not grouped is 1, corresponding to the data path along the axis.

On signal boundaries where pre / post filters need to extend outside of the signal, one solution is to extend the signal symmetrically and then apply pre / post filters. This is not a lossless operation in general because of the scaling. Another solution is to skip pre / post filtering on boundaries. There is no notable difference between the two solutions in terms of R-D performance as well as perceptual quality (for instance, if used for lossy image/video compression).

Turning now to Figure 11, the reversible overlap operator having the desired R-D efficient (i.e., unit determinant) property is then realized as a linear phase pre-filter structure 700 (Figure 7) that includes reversible, unit-determinant Hadamard networks 710, reversible orthogonal rotations 1110 (for component matrices U1, U2, V1 and V2), and reversible unit-determinant scaling 1120 (e.g., using the lifting step procedures 800, 900 or cascade 1100). The post filter is analogous to the pre filter and is built using the same construction, albeit with inverse lifting steps in the reverse order. This is illustrated in Figure 7, where the number of data values *M* in the block is in general any natural number. Although the illustration is for even valued *M,* odd values are also possible by noting that the "1 point Hadamard" transform of the center data value is itself. This procedure can be generalized to higher dimensional data.

In summary, the operation of the reversible overlap operator is illustrated in Figure 12. In a first step 1210, the input 2-dimensional digital media data is tiled into blocks (as also shown for the encoder 400 in Figure 4). The reversible overlap operator applies a Hadamard network 710 across adjacent tiles at step 1220. The operator then applies reversible rotations to sums and differences at step 1230, followed by the reversible scaling operator at step 1240. This is followed by another reversible block rotation (step 1250), and reversible inverse Hadamard network (step 1260).

With reference now to Figure 13, the matrix representations of the reversible block rotations and scaling operators depend upon the desired lapped operator using for instance the arithmetic described in equation (1). Figure 13 shows an example of a post-filter having the structure 700 shown in Figures 7 and 11, which is preceded by a reversible block transform (4 point Hadamard transform in this case). The transfer function of the post-filter is:

$$\mathbf{T} = \begin{pmatrix} 0.9885 & 0.1553 & -0.1553 & 0.2183 \\ -0.1499 & 0.9885 & 0.2183 & 0.1499 \\ 0.1502 & 0.2167 & 0.9884 & -0.1502 \\ 0.2167 & -0.1556 & 0.1556 & 0.9884 \end{pmatrix} \quad (6)$$

The low pass component of the Hadamard produces the impulse response shown in the graph in Figure 14.

## 4. Overlap Transform Modes

In one exemplary implementation, the encoder 400 and decoder 500 support multiple compression modes, using different types of transform (e.g., the lapped transform described herein, as well as a mode where the overlap filtering is omitted). During the process of encoding, an internal parameter *OverlapMode* is supplied by the user. This parameter determines the type of transform used for encoding, and is signaled via the bitstream to the decoder. In the exemplary implementation, three choices of *OverlapMode* are allowed - "OL_NONE", "OL_ONE" and "OL_TWO", and work as follows:

1. OL_NONE signals that a block transform is used for compressing the image.
2. OL_ONE signals that a lapped transform is used for the highpass (detail) image, and a block transform is used for the lowpass (DC) image component.
3. OL_TWO signals that a lapped transform is used for both the highpass and lowpass components of the image.

In other encoder/decoder implementations, fewer or additional transform modes can be supported.

In the exemplary implementation, the lapped transform is implemented as a 4x4 pre-filter (forward overlap 440) followed by a 4x4 block transform 450 on the encoder side, as shown in Figure 17 and described more fully below. On the decoder side, the lapped transform is implemented by a 4x4 inverse block transform 550 followed by a 4x4 post filter (inverse overlap 560), as shown in Figure 18 and described more fully below. When only a block transform is used (for instance, the OL_NONE mode, and for the lowpass bands of a OL_ONE mode compressed image), the pre and post filtering steps are omitted.

For the special case of luminance lowpass color planes in the YUV4:2:0 format, the filter and transform block sizes are 2x2. The following descriptions uses the term "4x4" to refer to the filter/transform size, with the understanding that 2x2 blocks will be used for this special case.

As shown in Figure 15, the block transform in this exemplary encoder implementation is performed on the natural 4x4 grid, i.e., the array of pixels in 4x4 tiles aligned with the macroblock borders. The filtering process is performed on a *staggered* 4x4 grid, i.e., the array of pixels in 4x4 tiles offset by 2 in both the horizontal and vertical directions from the macroblock borders. In the diagram 1500 of Figure 15, the four blocks 1510-1513 indicated correspond to the natural grid for the transform, and the shaded (grey) block 1520 in the center is the region over which the pre/post filter is applied. The pixels in the center block are referred to as the "support" for the overlap operator. Figure 16 illustrates the alignment 1600 of the transform and overlap operator for the 2x2 special case.

The block transform used in the exemplary implementation and applied to each of the 4x4 blocks is referred to herein as the "core" transform. This core transform implements a reversible approximate 4x4 DCT described by Srinivasan, U.S. Patent Application No. 11/015,707, entitled "Reversible Transform For Lossy And Lossless 2-D Data Compression," filed December 17, 2004 (the disclosure of which is hereby incorporated by reference), and also discussed below in the section entitled "Core Transform." After the core transform, a block is mapped into a coefficient block of 1 DC coefficient 460 and 15 AC coefficients 462 (as illustrated in Figure 4).

The pre/post filter (forward overlap 440 of Figure 4, and inverse overlap 560 of Figure 5) in combination with the core transform together implement a lapped transform, also referred to herein as the lapped operator.

After the core transform 450 is applied by the encoder 400 (Figure 4), the DC coefficients 460 of all blocks of a picture are collected to form a DC subband. A second stage of the core transform is applied to this DC subband. If *OverlapMode* = OL_TWO, a second stage overlap operator also is applied right before the second stage core transform. If the picture is a Y component, or a U or V component of a YUV_444 image, the DC subband 460 is tiled into 4×4 blocks, and the same 4×4 PCT and 4×4 PLO as the first stage are used. However, if the picture is a U or V component of a YUV 4:2:0 image, the DC subband is tiled into 2×2 blocks instead. Accordingly, 2×2 PCT and 2×2 PLO are used. Figure 16 illustrates the 2×2 support 1620 for the 2×2 lapped operator, which also spans 2×2 adjacent blocks 1610-1613.

With reference to Figure 15, on the corners of a picture, only 1 of the 4 blocks that the lapped operator spans is available. These are, block 3 for top left corner, block 1 for top right, block 2 for bottom left, and block 0 for bottom right. In these cases, the 4×4 or 2×2 lapped operator is skipped.

On picture boundaries other than the 4 corners, 2 of the 4 blocks that the lapped operator 1520 spans are available. In these areas, only a one dimensional operator is required. Therefore, the 4x4 lapped operator is replaced by two instances of a 1D 4-point lapped operator (and likewise for the 2x2 lapped operator).

Specifically, there are 4 cases (with reference to Figure 15):

- the support 1520, 1620 spans the top picture boundary (blocks 0 & 2 are not available and blocks 1 & 3 are available): the 4-point lapped operator is applied to points (i, j, k, 1) and to points (m, n, o, p), or the 2-point lapped operator is applied to points (c, d);
- the support 1520, 1620 spans the bottom picture boundary (blocks 1 & 3 are not available and 0 & 2 are available): the 4-point lapped operator is applied to points (a, b, c, d) and to points (e, f, g, h), or the 2-point lapped operator is applied to points (a, b);
- the support 1520, 1620 spans the left picture boundary (blocks 0 & 1 are not available and 2 & 3 are available): the 4-point lapped operator is applied to points (c, g, k, o) and to points (d, h, 1, p), or the 2-point lapped operator is applied to points (b, d);
- the support 1520, 1620 spans the right picture boundary (blocks 2 & 3 are not available and 0 & 1 are available): the 4-point lapped operator is applied to points (a, e, i, m) and to points (b, f, j, n), or the 2-point lapped operator is applied to points (a, c).

Accordingly, the lapped transform utilized in the encoding process 1700 (Figure 17) of the exemplary implementation of the encoder 400 (Figure 4) involves a 2×2 core transform, a 4×4 core transform, a 2×2 lapped operator, a 4×4 lapped operator, a 2-point lapped operator, and a 4-point lapped operator. The decoding process 1800 (Figure 18) utilized by the decoder 500 (Figure 5) reverses the process losslessly. The inverse core transform is the perfect inverse of the encoder's core transform, and the inverse lapped operator is the perfect inverse of the encoder's lapped operator. The one-dimensional 4-point lapped operator is described in the above section, entitled, "Reversible Overlap Operator." The two-dimensional lapped operators are described next.

**5. Two-Dimensional Pre/Post-Filtering**

In one approach, a 4x4 lapped operator for the two-dimensional pre/post-filtering 440 (Figure 4) can be implemented by separably applying the 4-point lapped operator 1900 of Figure 19 (also described in the section entitled, "Reversible Overlap Operator" above) horizontally and vertically to the 4x4 lapped operator support 1520 (Figure 15). This separable approach implementation 2000 of the 4x4 lapped operator is illustrated in Figure 20. More particularly, this approach applies the one-dimensional 4-point lapped operator to the vertical columns of the 4x4 lapped operator support 1520 (i.e., column a,e,i,m; column b,fj,n; column c,g,k,o; and column d,h,l,p), followed by applying the one-dimensional 4-point lapped operator to the horizontal rows (i.e., row a,b,c,d; row e,f,g,h; row, i,j,k,l; and row m,n,o.p). However, this approach 2000 has several drawbacks, as summarized in the Summary section above.

The exemplary implementation of the encoder 400/decoder 500 described herein uses another approach to implementing the two-dimensional pre/post-filtering (forward overlap 440 and inverse overlap 560) that addresses these drawbacks. This other approach 2100 (Figure 21) intersperses the operations from the horizontal and vertical filters of the separable approach in multiple stages. Further, the operations are grouped to form 2x2 transforms that have normalized scale-free and reversible "butterfly" realizations, as shown in Figures 24, 29 and 30. Moreover, the normalized scaling operation implemented in lifting steps described in the section entitled, "Reversible Overlap Operator," above can be applied to a more limited set of signal pairs by noting the cancellation of "cross terms" in the interspersed two-dimensional structure. This results in an efficient scale-free reversible 2-dimensional pre/post filter, which in conjunction with an efficient scale-free reversible 2-dimensional block transform provides a lapped transform that may be used in the encoder/decoder for effective and computationally efficient compression of images and video, both lossless and lossy.

As illustrated in Figure 21, this second approach in one illustrated implementation intersperses the vertical and horizontal operations of the pre/post filters into three stages. Within each stage, the operations are further re-arranged into basic 2x2 operations on separate groups of 4 points of the 4x4 data block.

More specifically, the first stage in the pre/post filters, as well as the last stage, is realized as a normalized 2 point Hadamard butterfly. The vertical and horizontal operations in this stage are re-arranged into a 2x2 normalized Hadamard operation (which is the $\mathcal{T}_H$ transform described in the previously referenced Srinivasan, U.S. Patent Application No. 11/015,707, entitled "Reversible Transform For Lossy And Lossless 2-D Data Compression," filed on December 17, 2004) as defined in the program listing 2200 shown in Figure 22, which is applied separately to groups of 4-points in the 4x4 data block. This 2x2 normalized Hadamard operation is applied to a 2x2 input matrix 2300 (points a, b, c and d) as shown in Figure 23. Shading is used in Figure 23 and the remainder of this document to represent correspondences between data points (equivalently pixels or matrix elements) and the processing steps. The basic 2x2 operation applied to the input matrix [a b;c d] is computed in-place as shown in Figure 23.

The Stage 1 and Stage 3 operations in the interspersed approach 2100 (Figure 21) can then be re-arranged into applications of this 2x2 normalized Hadamard operation 2200 (Figure 22) to four separate 4-point groups 2400 (Figure 24) in the data block, i.e., the 4-points at the corners 2410, the center 4-points 2420, the top/bottom edge 4-points 2430, and the 4-points at the left/right edges 2440.

On the other hand, the Stage 2 operations comprise two steps - the first is rotation (represented in Figure 21) and the second is scaling (not shown in Figure 21). The order of these two steps is not critical, although the same ordering must be maintained by all codecs for consistency, and their order in the lapped transform relative to the inverse lapped transform is in reverse.

The rotation step is implemented by again re-arranging the operations into separate 2x2 transforms. Since the lowpass terms are pass-through for the one-dimensional case (points x0 and x1 in the 4-point lapped operator 1900 of Figure 19), the low-low points (i.e. lowpass in both directions) in two-dimensions are again pass-through (i.e., not filtered at this stage). This corresponds to the upper left 2x2 sub-block 2910 in Figure 29.

The high-high terms 2920 (Figure 29) are implemented with an efficient 2x2 normalized reversible rotation operation 2500, which is the $\mathcal{T}_{\mathbf{odd\text{-}odd}}$ transform described in the previously referenced Srinivasan, U.S. Patent Application No. 11/015,707, entitled "Reversible Transform For Lossy And Lossless 2-D Data Compression," filed on December 17, 2004. This $\mathcal{T}_{\mathbf{odd\text{-}odd}}$ transform can be implemented in the C programming language listing 2500 shown in Figure 25. The offsets in the nontrivial lifting steps (i.e. those involving multiply by 3) are chosen so as to minimize overall bias. The inverse of this transform for the post-filter can be implemented in the C programming language listing 2600 shown in Figure 26.

The high-low and low-high terms 2930 (Figure 29) involve only one dimensional filtering since the other dimension operation is a pass-through. These are implemented with two-point rotations as defined in the C-programming language listing 2700 shown in Figure 27. The inverse operation for the post-filter is implemented in the C-programming language listing 2800 in Figure 28. These two-point rotations are simple approximations involving 2 computationally trivial lifting steps, which work well in practice. Other approximations alternatively may be used. This 2-point rotation is applied as four sets of 2-point operations to the high-low and low-high terms 2930, as indicated by the shading in Figure 29.

As for the scaling step of Stage 2, the one-dimensional 4-point lapped operator 1900 (Figure 19) includes scaling the four points by [*f f* 1/*f* 1/*f*]. For the 2-dimensional case, the scaling step realizes the outer product of [*f f* 1/*f* 1/*f*] with itself. The resulting scaling matrix is

$$\begin{bmatrix} f^2 & f^2 & 1 & 1 \\ f^2 & f^2 & 1 & 1 \\ 1 & 1 & f^{-2} & f^{-2} \\ 1 & 1 & f^{-2} & f^{-2} \end{bmatrix}.$$

Half the matrix entries are unity, and therefore these points are merely passed through. The remaining entries are paired symmetrically in two-point operations around the center of the matrix (i.e., pairs 3010, 3020, 3030 and 3040, as shown in the shading in Figure 30. Symmetry is necessary for best rate-distortion performance to match with Stages 1 and 3 of the interspersed approach 2100 (Figure 21). The 2-point scaling operation applied to each pair is itself implemented in the C-programming language listing 3100 shown in Figure 31. The inverse 2-point scaling operation for the post-filter is shown in the listing 3200 of Figure 32. Alternatively, other approximations are also possible for the two point scaling process. Moreover, the scaling process may be combined with the 2x2 Hadamard operations of either Stage 1 or Stage 3 noting the cancellations between their end operations.

Figure 33 shows a program listing 3300 of the complete 4x4 lapped operator using the interspersed approach 2100 shown in Figure 21. As discussed above for the exemplary implementation of the encoder 400/decoder 500 shown in Figures 17 and 18, the 4x4 lapped operator is applied to the non-corner and non-boundary part of a picture if OL_ONE is true. If OL_TWO is true, it also is applied to the non-corner and non-boundary part of the DC subband of a picture if it is not a U or V component of a YUV 4:2:0 image. Other alternative realizations, with different approximations or merged steps (especially between scaling and Hadamard) are possible.

As illustrated in Figure 15 above, the 4x4 lapped operator is applied to the lapped operator support, which can be represented as input data block

$$\begin{bmatrix} a & b & c & d \\ e & f & g & h \\ i & j & k & l \\ m & n & o & p \end{bmatrix}.$$

The 4×4 forward lapped operator is then defined in this program listing as the function, PLO4×4 (a, b, c, d, e, f, g, h, i, j, l, l, m, n, o, p). As discussed above, this function includes applying the 2x2 Hadamard operation 2200 (Figure 22), forward scaling 3100 (Figure 31), 2-point rotations 2700 (Figure 27), and the forward odd-odd transform 2500 (Figure 25) in three stages to the sub-groups of the points of the input block shown in Figures 24, 29 and 30.

Figure 34 shows a program listing 3400 of an implementation of the inverse 4x4 lapped operator also using the interspersed approach. Where the input coefficient block of the inverse 4x4 lapped operator is the block

$$\begin{bmatrix} a & b & c & d \\ e & f & g & h \\ i & j & k & l \\ m & n & o & p \end{bmatrix},$$

then the operator is defined in this program listing as the function IPLO4×4 (a, b, c, d, e, f, g, h, i, j, l, l, m, n, o, p). The inverse 4x4 lapped operator includes applying the 2x2 Hadamard operation 2200 (Figure 22) (which is its own inverse), the inverse odd-odd transform 2600 (Figure 26), the inverse 2-point rotation 2800 (Figure 28), and the inverse scaling 3200 (Figure 32), again in three stages to the sub-groups of points of the coefficient block as shown in Figures 24, 29 and 30.

As a special case discussed above, the exemplary implementation of the encoder/decoder shown in Figure 17 and 18 also applies a 2x2 pre/post-filtering operation. Figure 35 shows a program listing 3500 for the 2x2 pre-filtering. The 2x2 pre/post-filtering is similar to the 4x4 pre/post-filtering, except there is no rotation in Stage 2. The 2x2 pre-filtering therefore can be realized as for the 4x4 case described above with the Stage 2 rotation steps eliminated. Figure 36 shows a program listing 3600 implementing the 2x2 post-filtering.

In the exemplary implementation of the encoder/decoder shown in Figures 17 and 18, filtering along one dimension also is necessary along image edges where there are insufficient pixels for a 2D filtering step. The 1D filters may be more complicated than corresponding 2D filters due to the lack of shortcuts for normalized lossless lifting realizations. Implementation of 1D pre/post filtering is discussed in the section entitled, "Reversible Overlap Operator," above.

Figure 37 shows the program listing 3700 (in the C-programming language) of the 1-dimensional 2-point lapped operator, which is applied in the exemplary implementation of the encoder/decoder of Figures 17 and 18 to boundaries of the DC sub-bands of the U and V components of a YUV 4:2:0 image if OL_TWO is true. Figure 38 shows the program listing 3800 for the one-dimensional inverse 2-point lapped operator.

The exemplary implementation of the encoder/decoder of Figures 17 and 18 also applies a 4-point lapped operator to boundaries of a picture if OL_ONE is true. If OL_TWO is true, the 4-point lapped operator also is applied to boundaries of the DC subband of a picture if it is not a U or V component of a YUV 4:2:0 image. The 1-dimensional 4-point forward lapped operator for input data ordered as [*a b c d*] is then defined in the program listing 3900 (in C-programming language) shown in Figure 39 as the function, PLO4 (a, b, c, d). The program listing 4000 shown in Figure 40 includes the function, IPLO (a, b, c, d) that defines the 4-point inverse lapped operator on the input coefficients [*a b c d*].

### 6. Core Transform

As remarked above, the exemplary implementation of the encoder/decoder implements a lapped transform, which is a combination of the above described overlap operators together with a reversible approximate 4x4 DCT described by the above-referenced Srinivasan, U.S. Patent Application No. 11/015,707, entitled "Reversible Transform For Lossy And Lossless 2-D Data Compression," filed December 17, 2004. As indicated in Figure 17 for the encoding process 1700 and in Figure 18 for the decoding process 1800 of this exemplary implementation, the encoder/decoder uses a 2x2 core transform, 2x2 inverse core transform, 4x4 core transform and 4x4 inverse core transform. Implementations of these transforms are defined in the program listings (in the C-programming language) shown in Figures 41-46, and discussed below.

The 2x2 forward core transform on a 2x2 input block

$$\begin{bmatrix} a & b \\ c & d \end{bmatrix}$$

can be implemented in 2 steps:

1. apply the Hadamard2×2(a, b, c, d) function 2200 of Figure 22;
2. swap points b and c.

In some implementations, step 2 can be combined with quantization or zigzag scanning.

The 2x2 inverse core transform on a 2x2 coefficient block

$$\begin{bmatrix} a & b \\ c & d \end{bmatrix}$$

can be implemented in 2 steps:

1. swap points b and c;
2. apply the Hadamard2×2(a, b, c, d) function 2200 (Figure 22).

In some implementations, step 1 can be combined with dequantization or inverse zigzag scanning.

The 4x4 forward core transform applied on a 4x4 input data block

$$\begin{bmatrix} a & b & c & d \\ e & f & g & h \\ i & j & k & l \\ m & n & o & p \end{bmatrix}$$

can be implemented in 2 steps:

1. apply the function 4100, PCT4×4(a, b, c, d, e, f, g, h, I, j, k, l, m, n, o, p), shown in Figure 41. Similar to the 4x4 lapped operator, this function uses an interspersed approach, in which the operations are further arranged into 2x2 operations on sub-groups of points of the data block. These 2x2 operations includes the odd transform implemented in the function 4200 shown in Figure 42, and the odd-odd transform implemented in the function 4300 shown in Figure 43. Other approximations based on more or fewer lifting steps to implement the rotations are possible.

2. Reshuffle the data block from $\begin{bmatrix} a & i & g & e \\ c & k & m & o \\ j & d & p & n \\ b & l & h & f \end{bmatrix}$ to $\begin{bmatrix} a & b & c & d \\ e & f & g & h \\ i & j & k & l \\ m & n & o & p \end{bmatrix}$. This can be combined with quantization / zigzag scanning.

The 4x4 inverse core transform on the 4x4 input coefficient block

$$\begin{bmatrix} a & b & c & d \\ e & f & g & h \\ i & j & k & l \\ m & n & o & p \end{bmatrix}$$

can be implemented in the following 2 steps:

1. Reshuffle the coefficient block from $\begin{bmatrix} a & b & c & d \\ e & f & g & h \\ i & j & k & l \\ m & n & o & p \end{bmatrix}$ to $\begin{bmatrix} a & i & g & e \\ c & k & m & o \\ j & d & p & n \\ b & l & h & f \end{bmatrix}$. This can be combined with dequantization / inverse zigzag scanning.
2. Apply the function 4400, IPCT4×4(a, b, c, d, e, f, g, h, I, j, k, 1, m, n, o, p) shown in Figure44, which is the inverse of the function 4100, PCT4×4. The function 4400 includes the 2x2 transforms: the inverse odd transform implemented by the function 4500 shown in Figure 45, and the inverse odd-odd transform defined by the function 4600 shown in Figure 46.

### 7. Computing Environment

The above described codec based on a lapped transform using a 4x4 pre/post filtering can be performed on any of a variety of devices in which digital media signal processing is performed, including among other examples, computers; image and video recording, transmission and receiving equipment; portable video players; video conferencing; and etc. The digital media coding techniques can be implemented in hardware circuitry, as well as in digital media processing software executing within a computer or other computing environment, such as shown in Figure 47.

Figure 47 illustrates a generalized example of a suitable computing environment (4700) in which described embodiments may be implemented. The computing environment (4700) is not intended to suggest any limitation as to scope of use or functionality of the invention, as the present invention may be implemented in diverse general-purpose or special-purpose computing environments.

With reference to Figure 47, the computing environment (4700) includes at least one processing unit (4710) and memory (4720). In Figure 47, this most basic configuration (4730) is included within a dashed line. The processing unit (4710) executes computer-executable instructions and may be a real or a virtual processor. In a multi-processing system, multiple processing units execute computer-executable instructions to increase processing power. The memory (4720) may be volatile memory (e.g., registers, cache, RAM), non-volatile memory (e.g., ROM, EEPROM, flash memory, etc.), or some combination of the two. The memory (4720) stores software (4780) implementing the described encoder/decoder and transforms.

A computing environment may have additional features. For example, the computing environment (4700) includes storage (4740), one or more input devices (4750), one or more output devices (4760), and one or more communication connections (4770). An interconnection mechanism (not shown) such as a bus, controller, or network interconnects the components of the computing environment (4700). Typically, operating system software (not shown) provides an operating environment for other software executing in the computing environment (4700), and coordinates activities of the components of the computing environment (4700).

The storage (4740) may be removable or non-removable, and includes magnetic disks, magnetic tapes or cassettes, CD-ROMs, CD-RWs, DVDs, or any other medium which can be used to store information and which can be accessed within the computing environment (4700). The storage (4740) stores instructions for the software (4780) implementing the codec based on a lapped transform using the 4x4 pre/post-filtering.

The input device(s) (4750) may be a touch input device such as a keyboard, mouse, pen, or trackball, a voice input device, a scanning device, or another device that provides input to the computing environment (4700). For audio, the input device(s) (4750) may be a sound card or similar device that accepts audio input in analog or digital form, or a CD-ROM reader that provides audio samples to the computing environment. The output device(s) (4760) may be a display, printer, speaker, CD-writer, or another device that provides output from the computing environment (4700).

The communication connection(s) (4770) enable communication over a communication medium to another computing entity. The communication medium conveys information such as computer-executable instructions, compressed audio or video information, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The digital media processing techniques herein can be described in the general context of computer-readable media. Computer-readable media are any available media that can be accessed within a computing environment. By way of example, and not limitation, with the computing environment (4700), computer-readable media include memory (4720), storage (4740), communication media, and combinations of any of the above.

The digital media processing techniques herein can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment.

For the sake of presentation, the detailed description uses terms like "determine," "generate," "adjust," and "apply" to describe computer operations in a computing environment. These terms are high-level abstractions for operations performed by a computer, and should not be confused with acts performed by a human being. The actual computer operations corresponding to these terms vary depending on implementation.

### 4. Variations And Extensions Of the Reversible Overlap Operator

Various modifications and extensions of the above described reversible overlap operator can be made. Although the descriptions presented above are for one dimensional data, the same procedure may be applied separably, or non-separably to multiple data dimensions.

The orthogonal rotations in the above described reversible overlap operator implementation be replaced by approximations thereof, or by other transforms which may not be orthogonal.

Furthermore, although the primary focus in the above description has been on the lossless recovery of input data, the same transform may be used for lossy data compression as well. In this case, the loss may occur either in the quantization process, or due to a limited precision/approximate implementation of either pre filter or post filter, or due to other inaccuracies, or a combination of multiple factors.

The reversible overlap operator described here may be applied to domains outside of data-compression. The lapped transform using the reversible overlap operator may itself be expansive.

The reversible overlap operator may be applied, in appropriately modified form, to implement multirate filter banks, wavelets, lapped transforms with support spanning more than 2 block widths (K >2N).

The reversible overlap operator may be applied in a spatially varying manner, in which the extent and shape of overlap filter may vary across the spatial extent of the data.

## Claims

1. A method of encoding 2-dimensional digital media data (410), the method comprising:

   tiling 2-dimensional digital media data into 4x4 blocks;
   by a reversible 4x4 overlap operator, applying operations including a Hadamard network (710) applied across adjacent blocks, a first reversible rotation (1110), a reversible scaling (1120), a second reversible rotation (1110) and a reversible inverse Hadamard network (710);
   wherein said operations are applied in three stages;

wherein each of the first and third stages comprises applying a 2x2 normalized Hadamard operation (710) separately to predefined groups of four points in a block, said predefined groups comprising a group of four corner points, a group of four center points, a group of four non-corner points at the top and bottom edges, and a group of four non-corner points at the left and right edges; and
wherein the second stage comprises arranging said rotations into a 2x2 normalized reversible rotation operation for high-high terms (2920), and into two-point rotations for high-low and low-high terms (2930), and further comprises scaling the rotated points and arranging the scaled points as respective pairs of points from the top-left and bottom right quadrants each pair arranged symmetrically around the center of the block into predefined two-point operations.

**2.** The method of claim 1, wherein each of said three stages comprises separate horizontal and vertical operations.

**3.** A method of decoding 2-dimensional digital media data, the method comprising:

receiving a compressed bitstream (420);
extracting transform coefficient bits from respective packets of the compressed bitstream (420);
decoding said coefficients from said packets;
dequantizing said coefficients to obtain AC coefficients (542);
regenerating DC coefficients (540) based on applying an inverse transform;
regenerating data by applying a 4x4 inverse transform to said DC coefficients and said AC coefficients (542); and
applying an inverse 4x4 overlap filter to block edges in the regenerated data, said inverse overlap filter comprising applying a 2x2 Hadamard operation (710),

first and second inverse rotations (1110), and an inverse scaling (1120) in three stages,
wherein each of the first and stages comprises applying a 2x2 Hadamard operation separately to sub-groups of points of blocks of coefficients, wherein said sub-groups comprise a group of four corner points, a group of four center points, a group of four non-corner points at the top and bottom edges, and a group of four non-corner points at the left and right edges; and
wherein the second stage comprises arranging said inverse rotations (1110) into a 2x2 normalised inverse rotation for high-high terms (2920), and into two-point operations for high-low and low-high terms (2930), and further comprises inverse scaling of the rotated points and arranging the scaled points as respective pairs of points from the top-left and bottom right quadrants each pair arranged symmetrically around the center of the block into predefined two-point operations.

**4.** A computer-readable storage medium storing a software program executable on a processor to cause the processor to perform the methods of any one of the preceding claims 1-3.

**5.** A 2-dimensional digital media processor, comprising:

a data storage buffer for storing 2-dimensional digital media data to be processed using a lapped transform;
a processor programmed to perform the steps according to any one of the preceding claims 1-3.

**Patentansprüche**

**1.** Verfahren zum Codieren von 2-dimensionalen digitalen Mediendaten (410), wobei das Verfahren umfasst:

Teilen von 2-dimensionalen digitalen Mediendaten in 4 x 4 Blöcke;
durch einen reversiblen 4 x 4 Überlappungsoperator Anwenden von Operationen, die ein Hadamard-Netzwerk (710), das über benachbarte Blöcke hinweg angewendet wird, eine erste reversible Rotation (1110), eine reversible Skalierung (1120), eine zweite reversible Rotation (1110) und ein reversibles inverses Hadamard-Netzwerk (710) aufweisen;
wobei die Operationen in drei Stufen angewendet werden;
wobei jeweils die erste und dritte Stufe eine 2 x 2 normalisierte Hadamard-Operation (710) separat auf vordefinierte Gruppen von vier Punkten in einem Block anwenden, wobei die vordefinierten Gruppen eine Gruppe von vier Eckpunkten, eine Gruppe von vier Mittelpunkten, eine Gruppe von vier Nicht-Eckpunkten an den oberen und unteren Rändern und eine Gruppe von vier Nicht-Eckpunkten an den linken und rechten Rändern umfassen; und

wobei die zweite Stufe das Anordnen der Rotationen in eine 2 x 2 normalisierte reversible Rotationsoperation für Ausdrücke hoch-hoch (2920) und in Zweipunktrotationen für Ausdrücke hoch-niedrig und niedrig-hoch (2930) umfasst und des Weiteren das Skalieren der rotierten Punkte und das Anordnen der skalierten Punkte als jeweilige Punktpaare von den Quadranten oben-links und unten rechts umfasst, wobei jedes Paar symmetrisch um das Zentrum des Blocks herum in vordefinierte Zweipunktoperationen angeordnet ist.

**2.** Verfahren nach Anspruch 1, wobei jede der drei Stufen separate horizontale und vertikale Operationen umfasst.

**3.** Verfahren zum Dekodieren von 2-dimensionalen digitalen Mediendaten, wobei das Verfahren umfasst:

Empfangen eines komprimierten Bitstroms (420);
Extrahieren von Transformationskoeffizientenbits aus jeweiligen Paketen des komprimierten Bitstroms (420);
Dekodieren der Koeffizienten aus den Paketen;
Dequantisieren der Koeffizienten, um AC Koeffizienten (542) zu erhalten;
Regenerieren von DC Koeffizienten (540) auf der Basis der Anwendung einer inversen Transformation;
Regenerieren von Daten durch Anwenden einer 4 x 4 inversen Transformation auf die DC Koeffizienten und die AC Koeffizienten (542) und
Anwenden eines inversen 4 x 4 Überlappungsfilters auf Blockränder in den regenerierten Daten, wobei der inverse Überlappungsfilter das Anwenden einer 2 x 2 Hadamard-Operation (710), einer ersten und zweiten inversen Rotation (1110) und einer inversen Skalierung (1120) in drei Stufen umfasst,
wobei jede der ersten und Stufen das separate Anwenden einer 2 x 2 Hadamard-Operation separat auf Untergruppen von Blockpunkten von Koeffizienten umfasst, wobei die Untergruppen eine Gruppe von vier Eckpunkten, eine Gruppe von vier Mittelpunkten, eine Gruppe von vier Nicht-Eckpunkten an den oberen und unteren Rändern und eine Gruppe von vier Nicht-Eckpunkten an den linken und rechten Rändern umfassen; und
wobei die zweite Stufe das Anordnen der inversen Rotationen (1110) in eine 2 x 2 normalisierte reversible Rotationsoperation für Ausdrücke hoch-hoch (2920) und in Zweipunktrotationen für Ausdrücke hoch-niedrig und niedrig-hoch (2930) umfasst und des Weiteren das inverse Skalieren der rotierten Punkte und das Anordnen der skalierten Punkte als jeweilige Punktpaare von den Quadranten oben-links und unten rechts umfasst, wobei jedes Paar symmetrisch um das Zentrum des Blocks herum in vordefinierte Zweipunktoperationen angeordnet ist.

**4.** Computerlesbares Speichermedium, das ein auf einem Prozessor ausführbares Softwareprogramm speichert, um den Prozessor die Verfahren nach einem der vorhergehenden Ansprüche 1 - 3 ausführen zu lassen.

**5.** 2-dimensionaler digitaler Medienprozessor, der umfasst:

einen Datenspeicherpuffer zum Speichern von 2-dimensionalen digitalen Mediendaten, die mittels einer überlappenden Transformation zu verarbeiten sind;
einen Prozessor, der programmiert ist, um die Schritte nach einem der vorhergehenden Ansprüche 1 - 3 durchzuführen.

**Revendications**

**1.** Procédé de codage de données média numériques bidimensionelles (410), le procédé comprenant :

le pavage de données média numériques bidimensionelles en blocs 4x4 ;
par un opérateur de chevauchement 4x4 réversible, qui applique des opérations comprenant un réseau Hadamard (710) appliqué à des blocs adjacents, une première rotation réversible (1110), un redimensionnement réversible (1120), une deuxième rotation réversible (1110), et un réseau Hadamard inverse réversible (710) ;
dans lequel lesdites opérations sont appliquées en trois étages ;
dans lequel chacun des premier et troisième étages comprend l’application séparée d’une opération Hadamard normalisée 2x2 (710) à des groupes prédéfinis de quatre points dans un bloc, lesdits groupes prédéfinis comprenant un groupe de quatre points de coin, un groupe de quatre points de centre, un groupe de quatre points non de coin sur les bords supérieur et inférieur, et un groupe de quatre points non de coin sur les bords gauche et droit ; et
dans lequel le deuxième étage comprend l’agencement desdites rotations en une opération de rotation réversible normalisée 2x2 pour des termes haut-haut (2920), et en des rotations à deux points pour des termes haut-bas et bas-haut (2930), et comprend en outre le redimensionnement des points qui ont subi une rotation et l'agencement des points redimensionnés comme des paires de points respectives des quadrants supérieur gauche et inférieur droit, chaque paire étant agencée symétriquement autour du centre du bloc dans des opérations à deux points prédéfinies.

**2.** Procédé selon la revendication 1, dans lequel chacun des trois étages comprend des opérations horizontales et verticales séparées.

**3.** Procédé de décodage de données média numériques bidimensionelles, le procédé comprenant :

la réception d'un flux binaire compressé (420) ;
l'extraction de bits de coefficient de transformée dans des paquets respectifs du flux binaire compressé (420) ;
le décodage desdits coefficients provenant desdits paquets ;
la déquantification desdits coefficients pour obtenir des coefficients de courant alternatif CA (542) ;
la régénération de coefficients de courant continu CC (540) sur base de l'application d'une transformée inverse ;
la régénération de données en appliquant une transformée inverse 4x4 auxdits coefficients CC et auxdits coefficients CA (542) ; et
l'application d'un filtre de chevauchement 4x4 inverse aux bords de bloc dans les données régénérées, ledit filtre de chevauchement inverse comprenant l'application d'une opération Hadamard 2x2 (710), de première et deuxième rotations inverses (1110), et d'un redimensionnement inverse (1120) en trois étages, dans lequel chacun des premier et troisième étages comprend l'application séparée d'une opération Hadamard 2x2 à des sous-groupes de points de blocs de coefficients, dans lequel lesdits sous-groupes comprennent un groupe de quatre points de coin, un groupe de quatre points de centre, un groupe de quatre points non de coin sur les bords supérieur et inférieur, et un groupe de quatre points non de coin sur les bords gauche et droit ; et
dans lequel le deuxième étage comprend l'agencement desdites rotations inverses (1110) en une rotation inverse normalisée 2x2 pour des termes haut-haut (2920) et en des opérations à deux points pour des termes haut-bas et bas-haut (2930), et comprend en outre le redimensionnement inverse des points qui ont subi une rotation et l'agencement des points redimensionnés comme des paires de points respectives des quadrants supérieur gauche et inférieur droit, chaque paire étant agencée symétriquement autour du centre du bloc dans des opérations à deux points prédéfinies.

**4.** Support de stockage lisible par un ordinateur sur lequel est stocké un programme logiciel exécutable par un processeur pour commander au processeur de mettre en oeuvre les procédés selon l'une quelconque des revendications précédentes 1 à 3.

**5.** Processeur de médias numériques bidimensionnels, comprenant :

un tampon de stockage de données pour stocker des données média numériques bidimensionelles à traiter en utilisant une transformée à recouvrement ;
un processeur programmé pour mettre en oeuvre les étapes selon l'une quelconque des revendications précédentes 1 à 3.

Figure 1
Prior Art

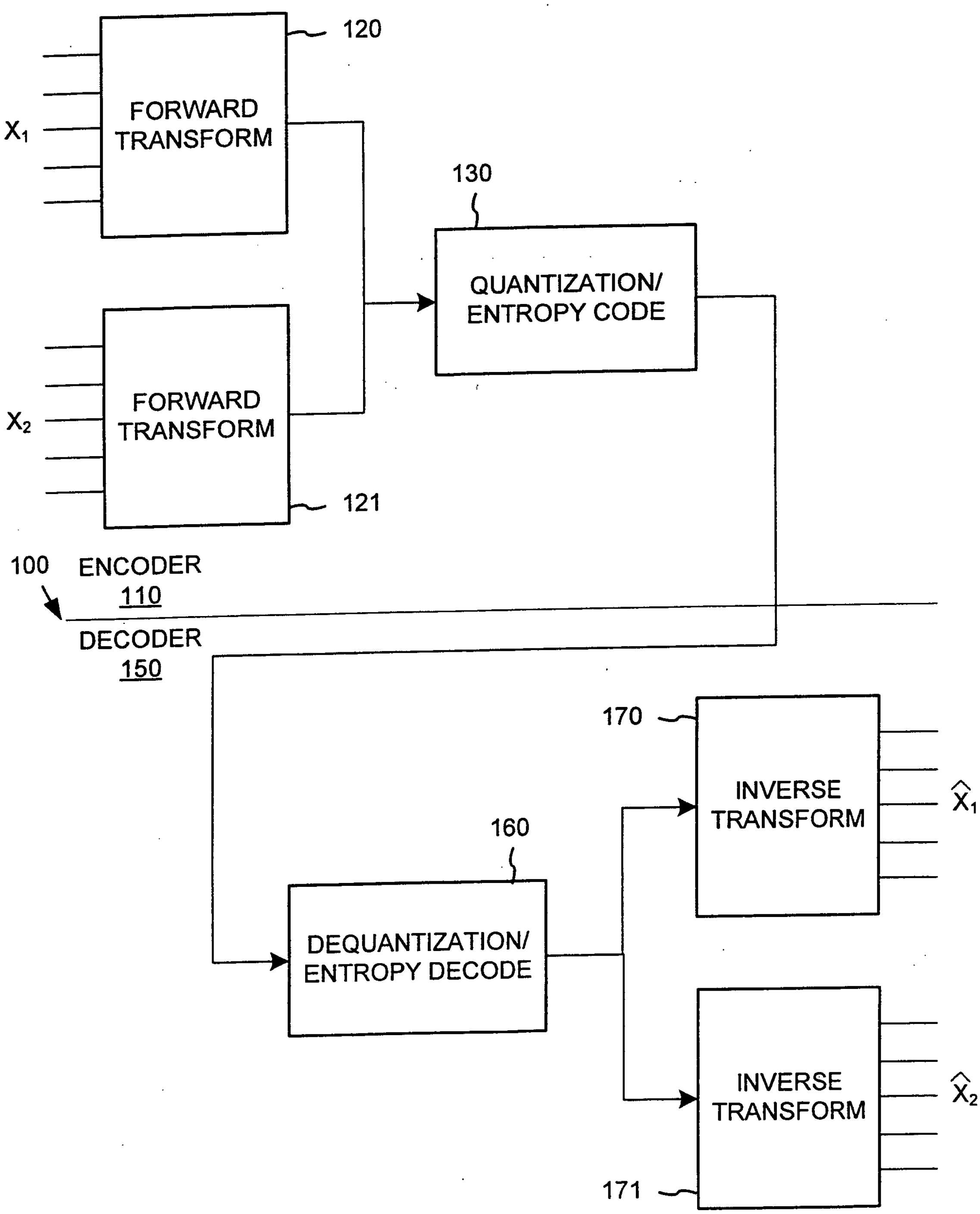

Figure 2
Prior Art

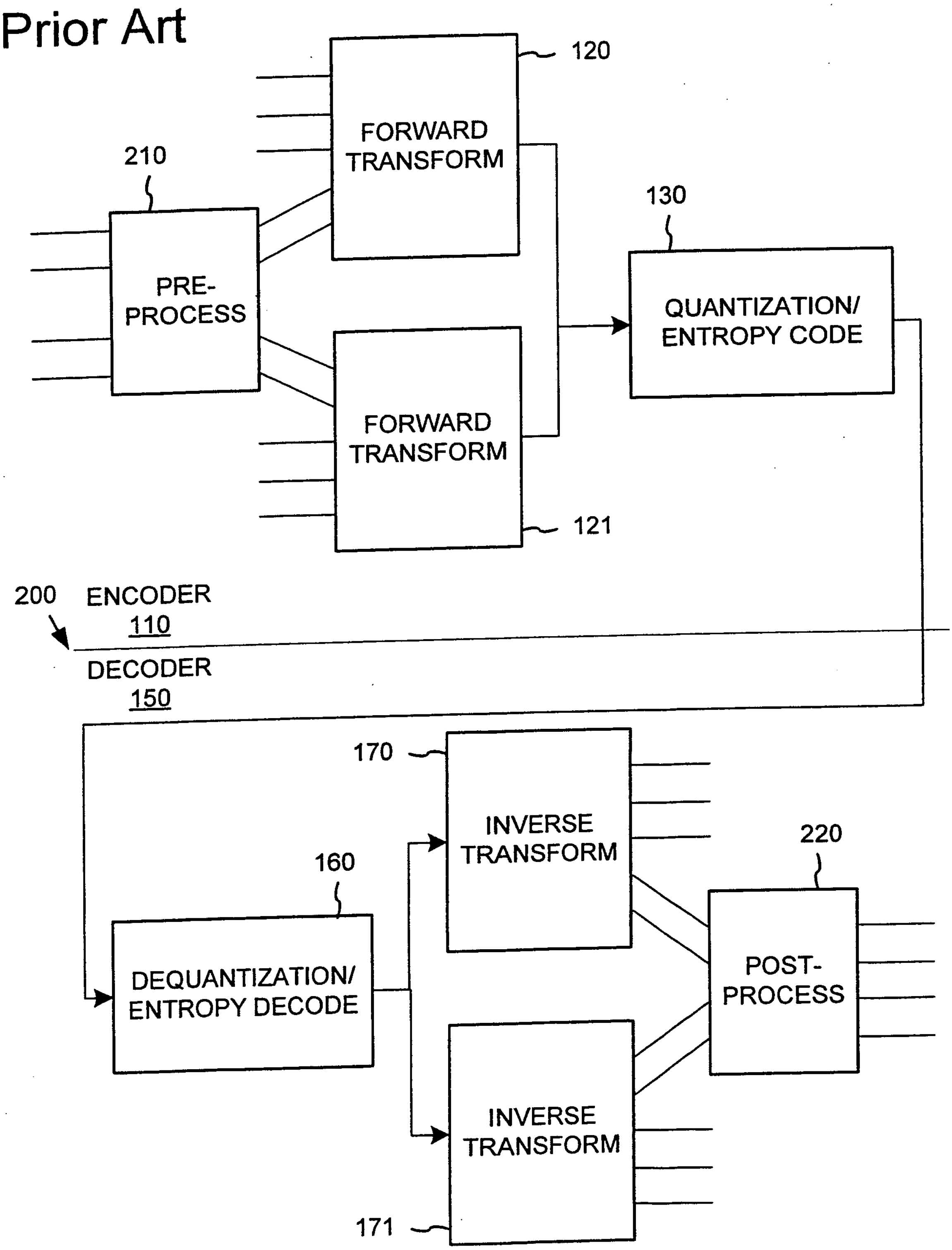

Figure 3

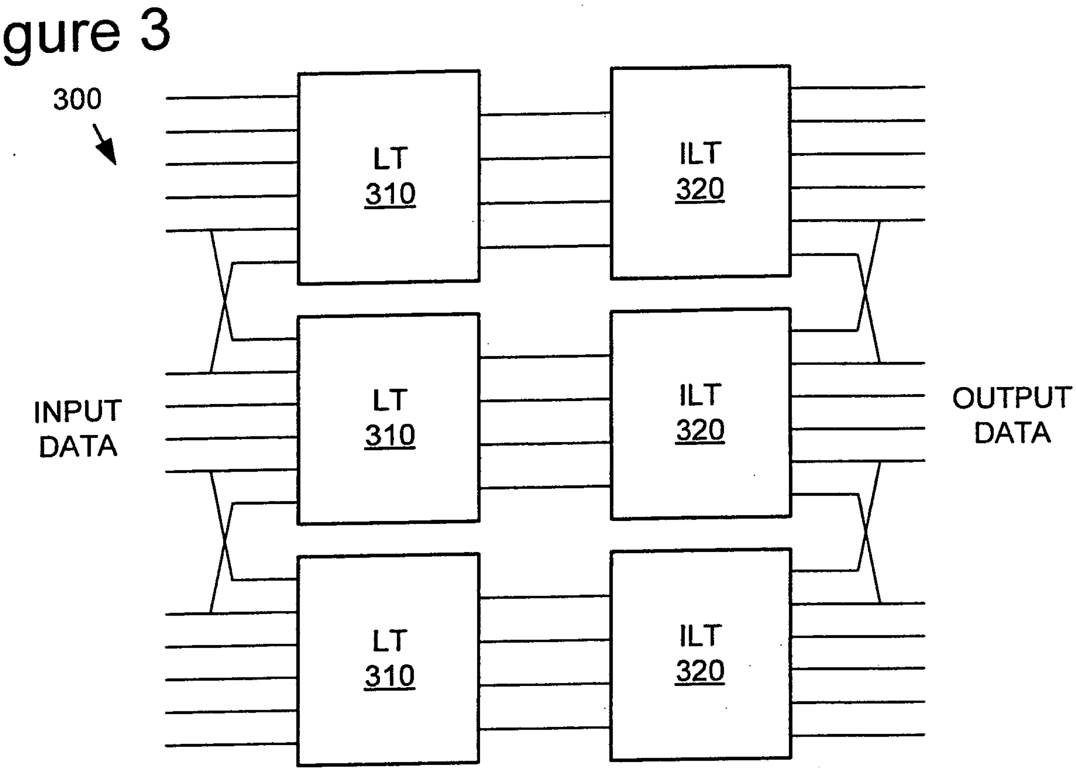


Figure 6

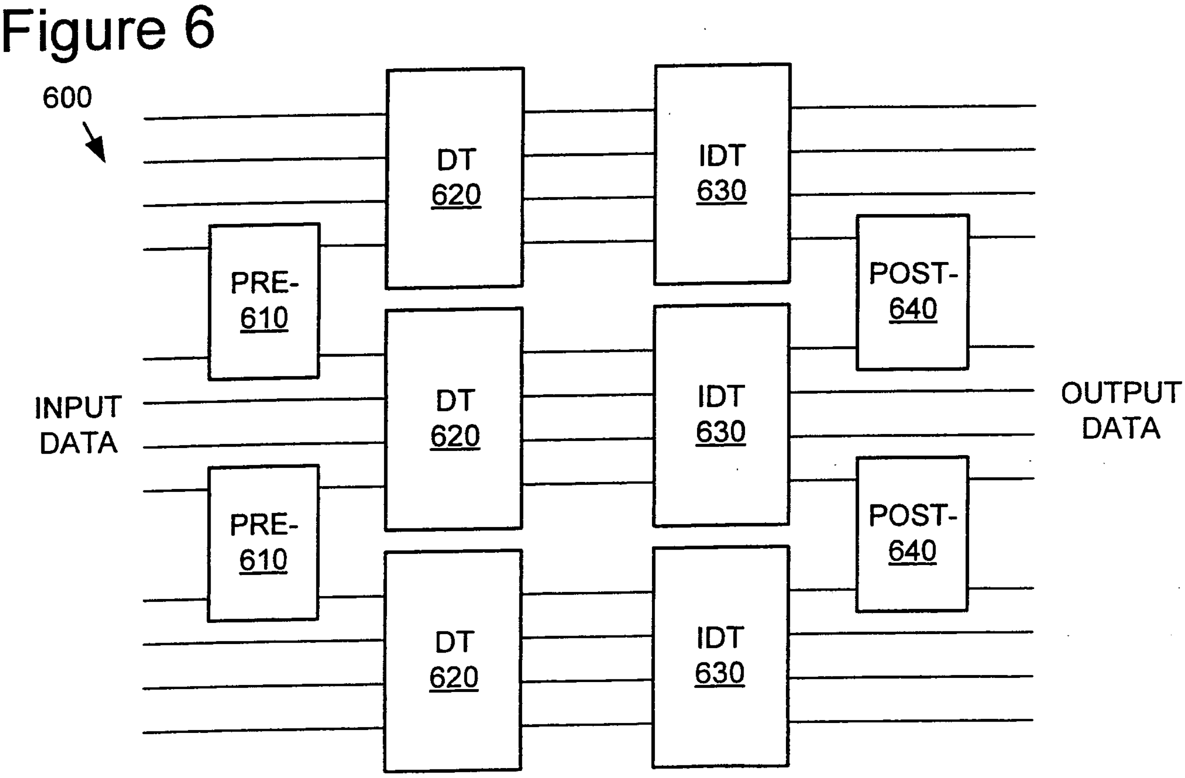

Figure 4

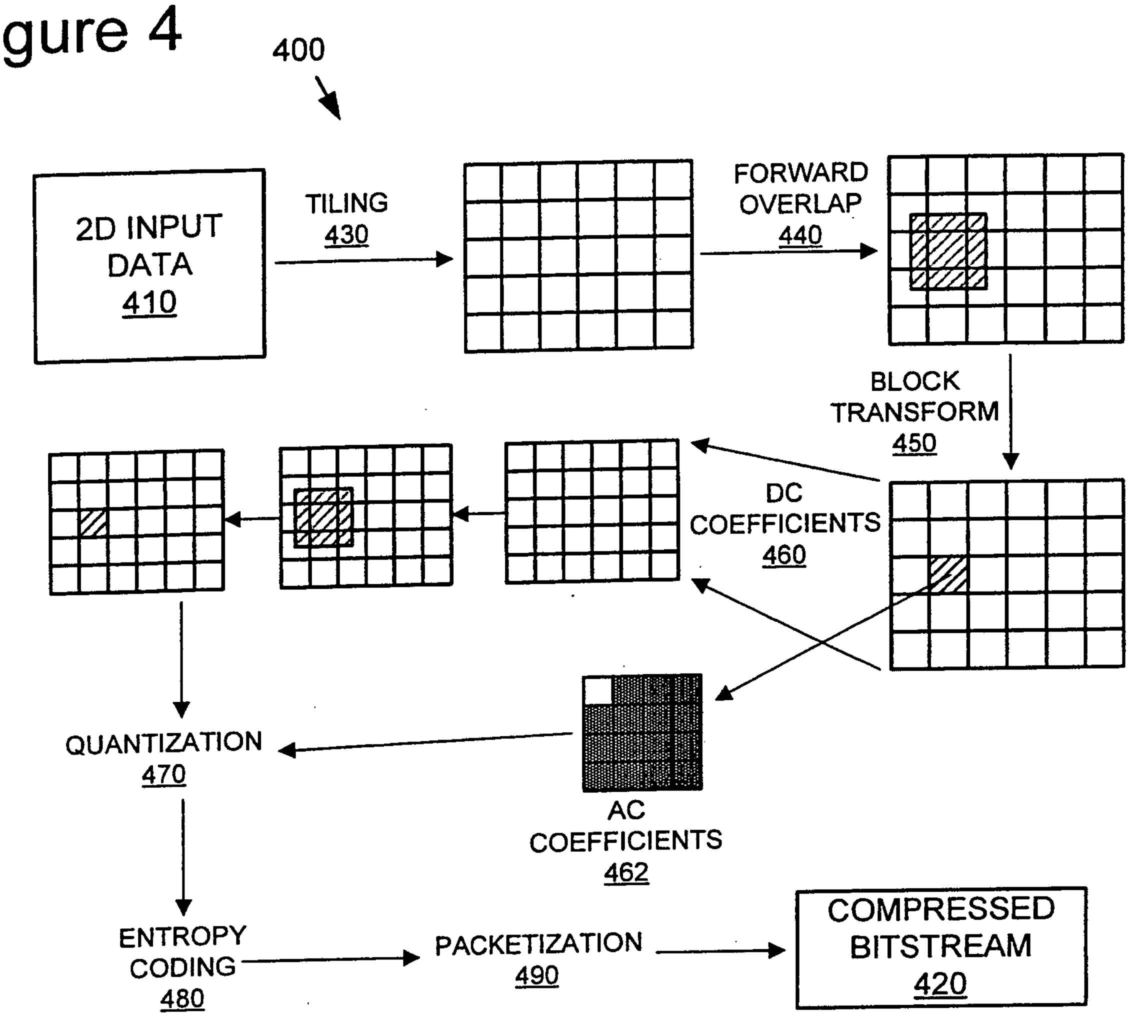
400
2D INPUT DATA 410
TILING 430
FORWARD OVERLAP 440
BLOCK TRANSFORM 450
DC COEFFICIENTS 460
AC COEFFICIENTS 462
QUANTIZATION 470
ENTROPY CODING 480
PACKETIZATION 490
COMPRESSED BITSTREAM 420

Figure 5

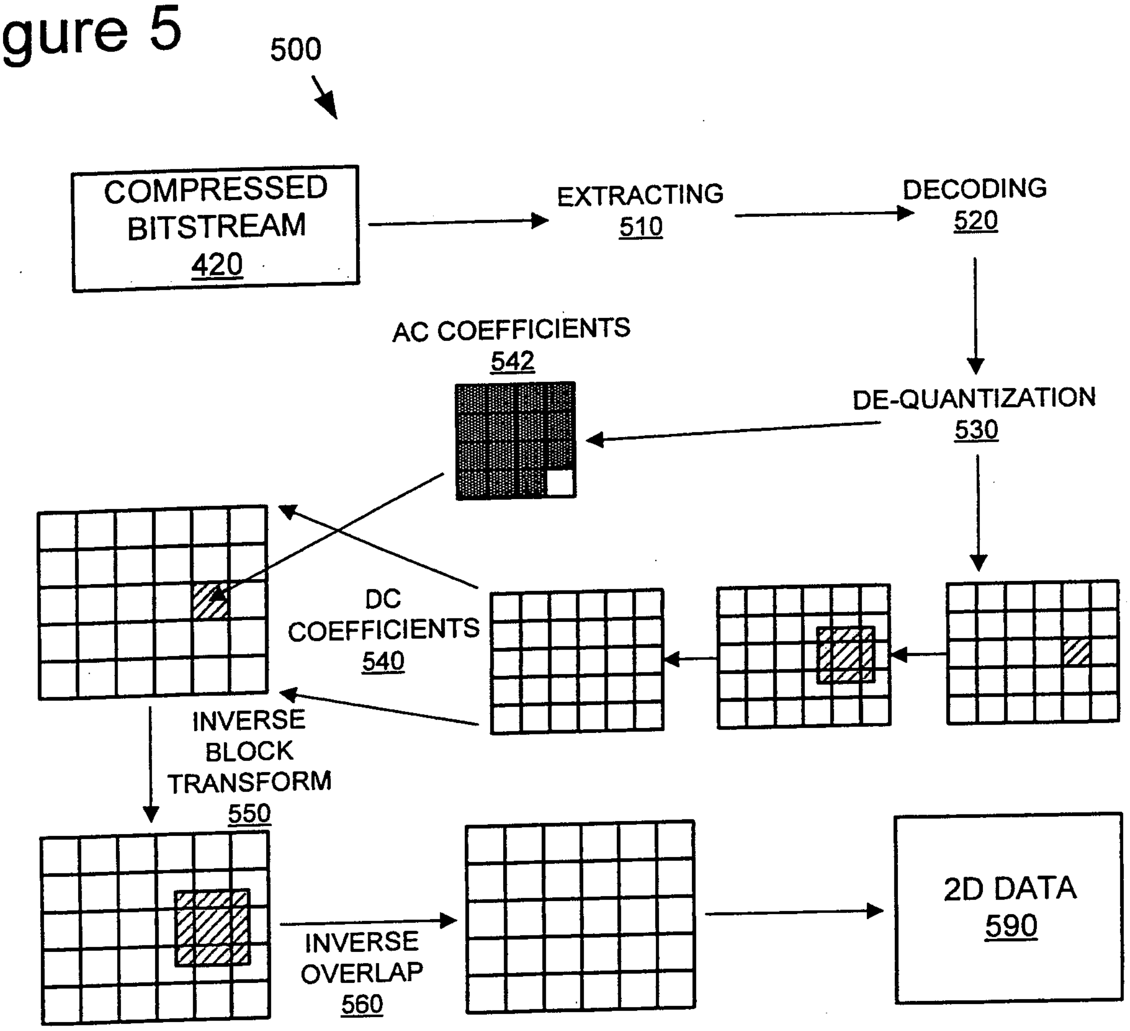
500
COMPRESSED BITSTREAM 420
EXTRACTING 510
DECODING 520
AC COEFFICIENTS 542
DE-QUANTIZATION 530
DC COEFFICIENTS 540
INVERSE BLOCK TRANSFORM 550
INVERSE OVERLAP 560
2D DATA 590

Figure 7

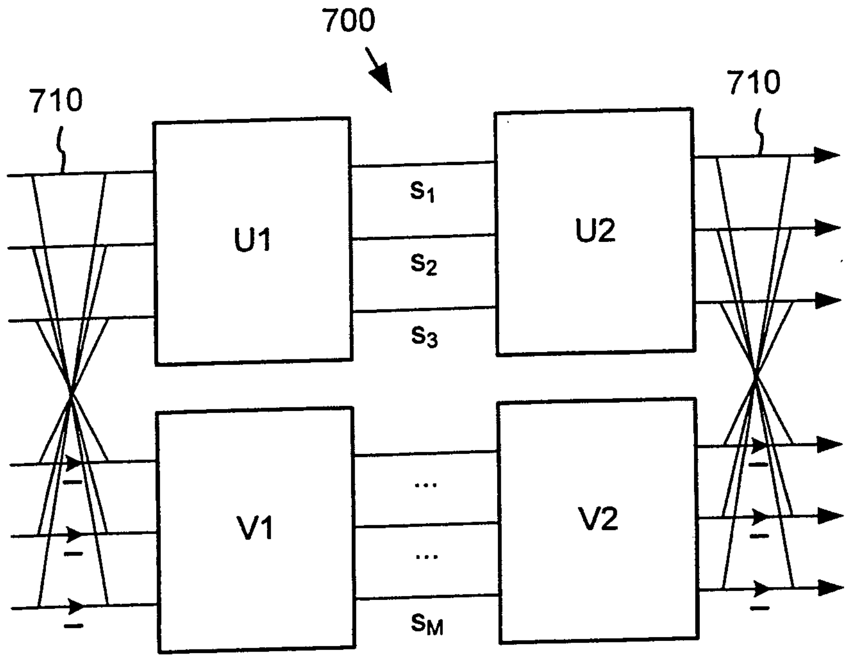


Figure 8

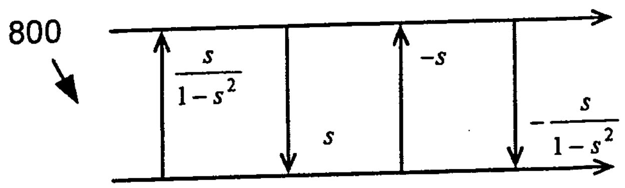


Figure 9

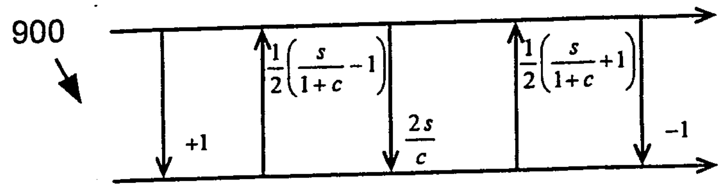

Figure 10

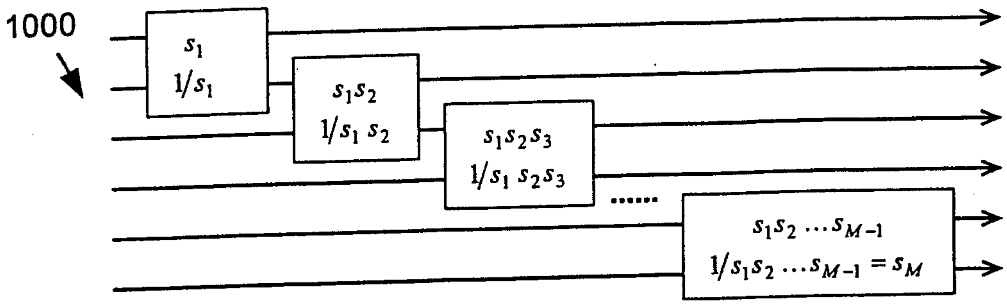


Figure 11

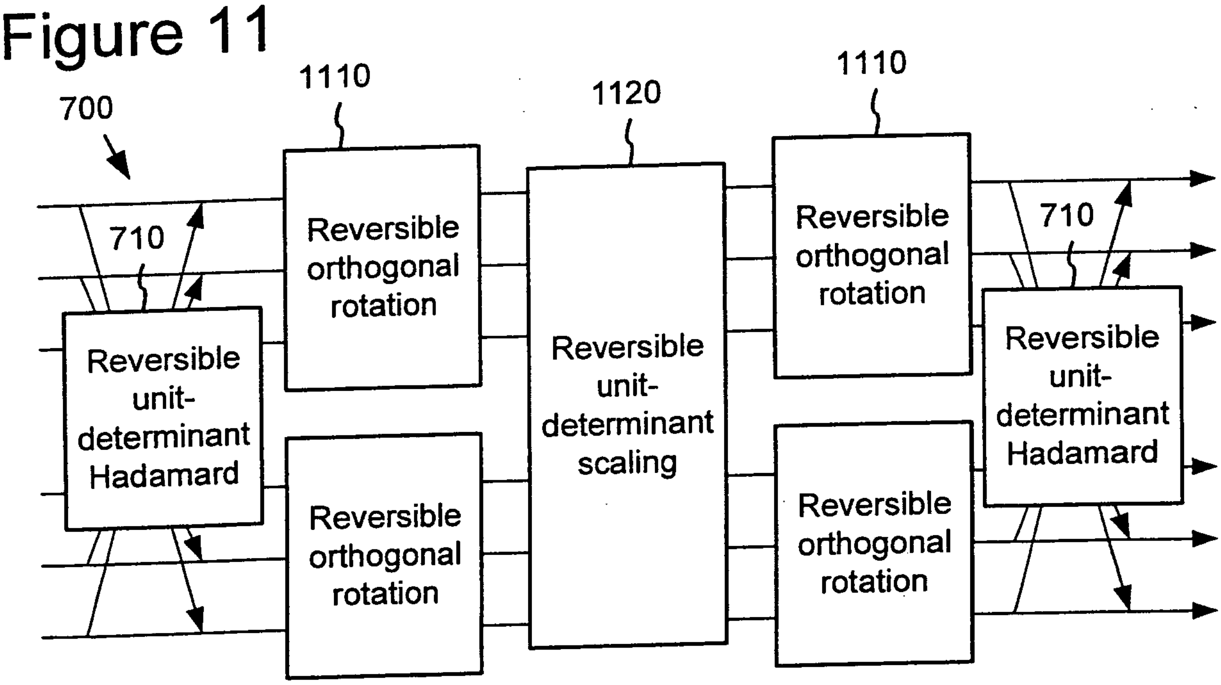

Figure 12

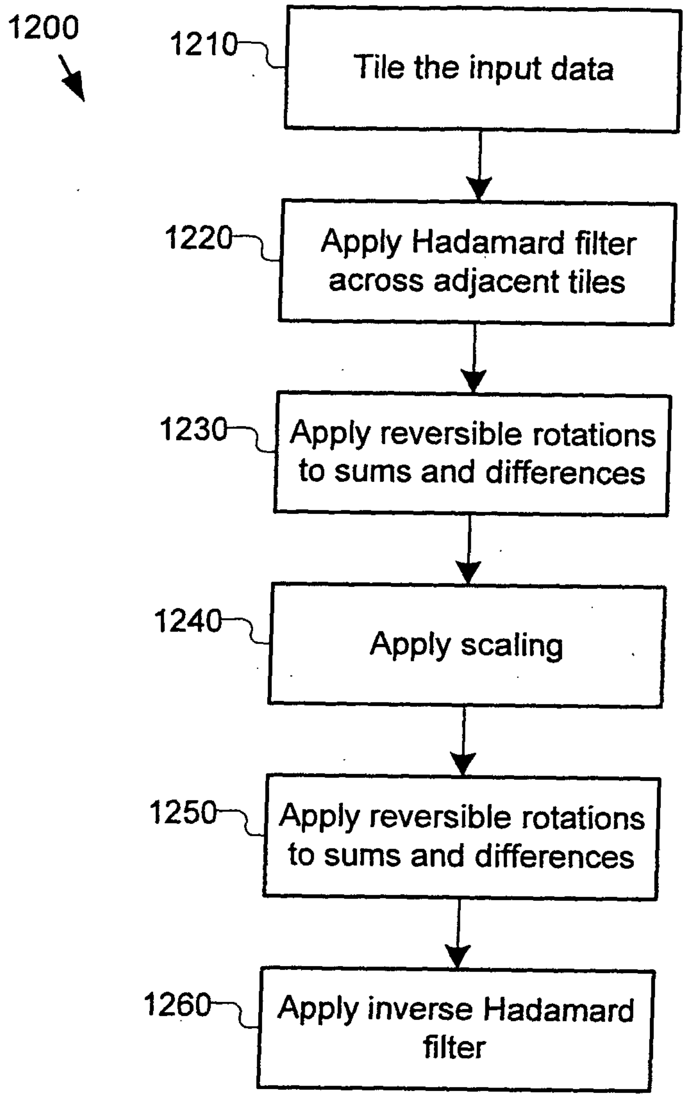
1200
1210
Tile the input data
1220
Apply Hadamard filter across adjacent tiles
1230
Apply reversible rotations to sums and differences
1240
Apply scaling
1250
Apply reversible rotations to sums and differences
1260
Apply inverse Hadamard filter

# Figure 13

1300

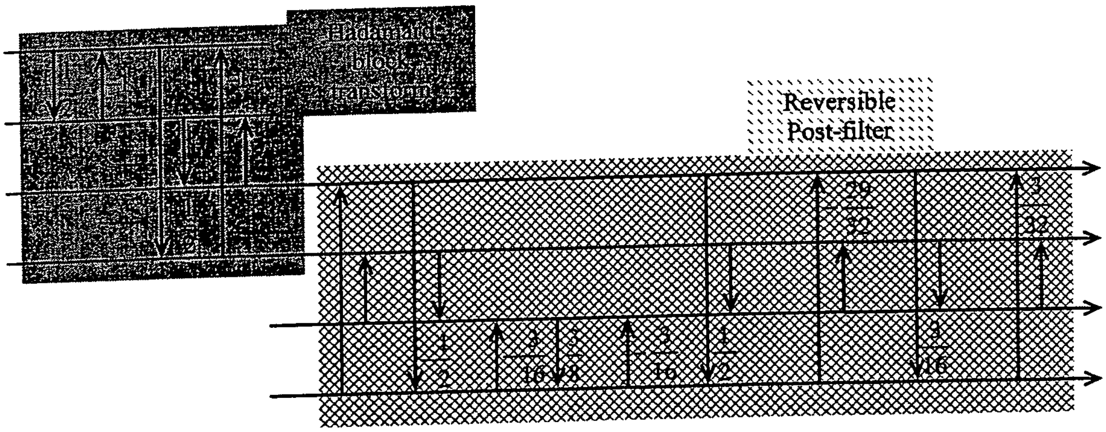


# Figure 14

1400

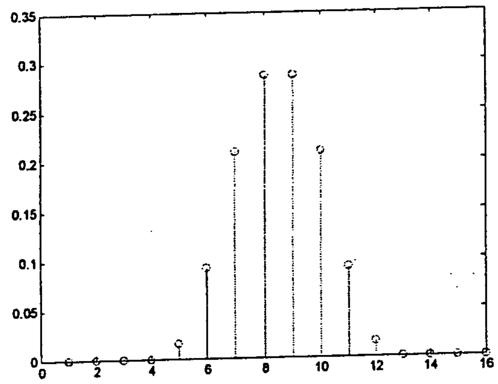

Figure 15

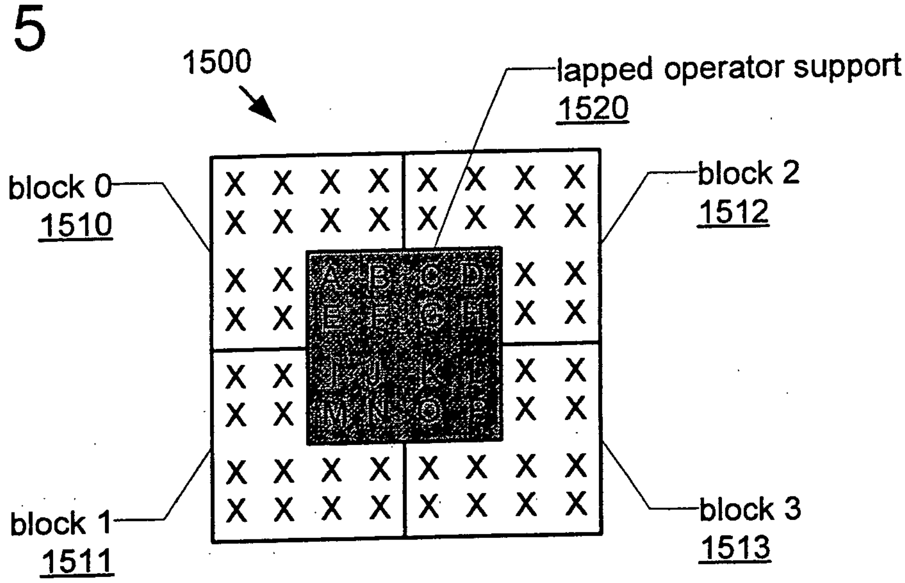


Figure 16

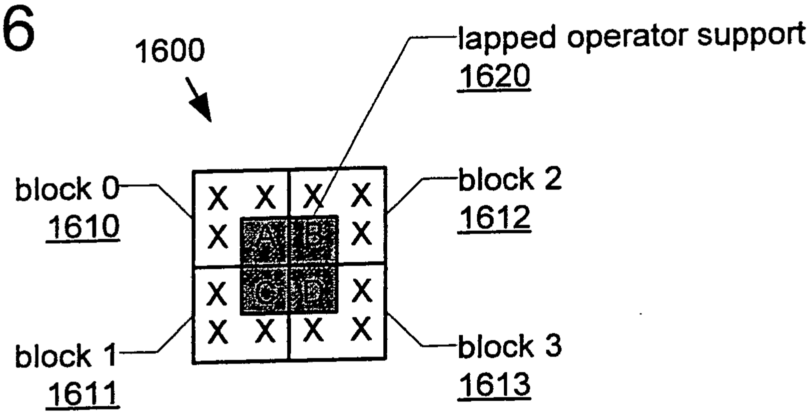

# Figure 17

1700

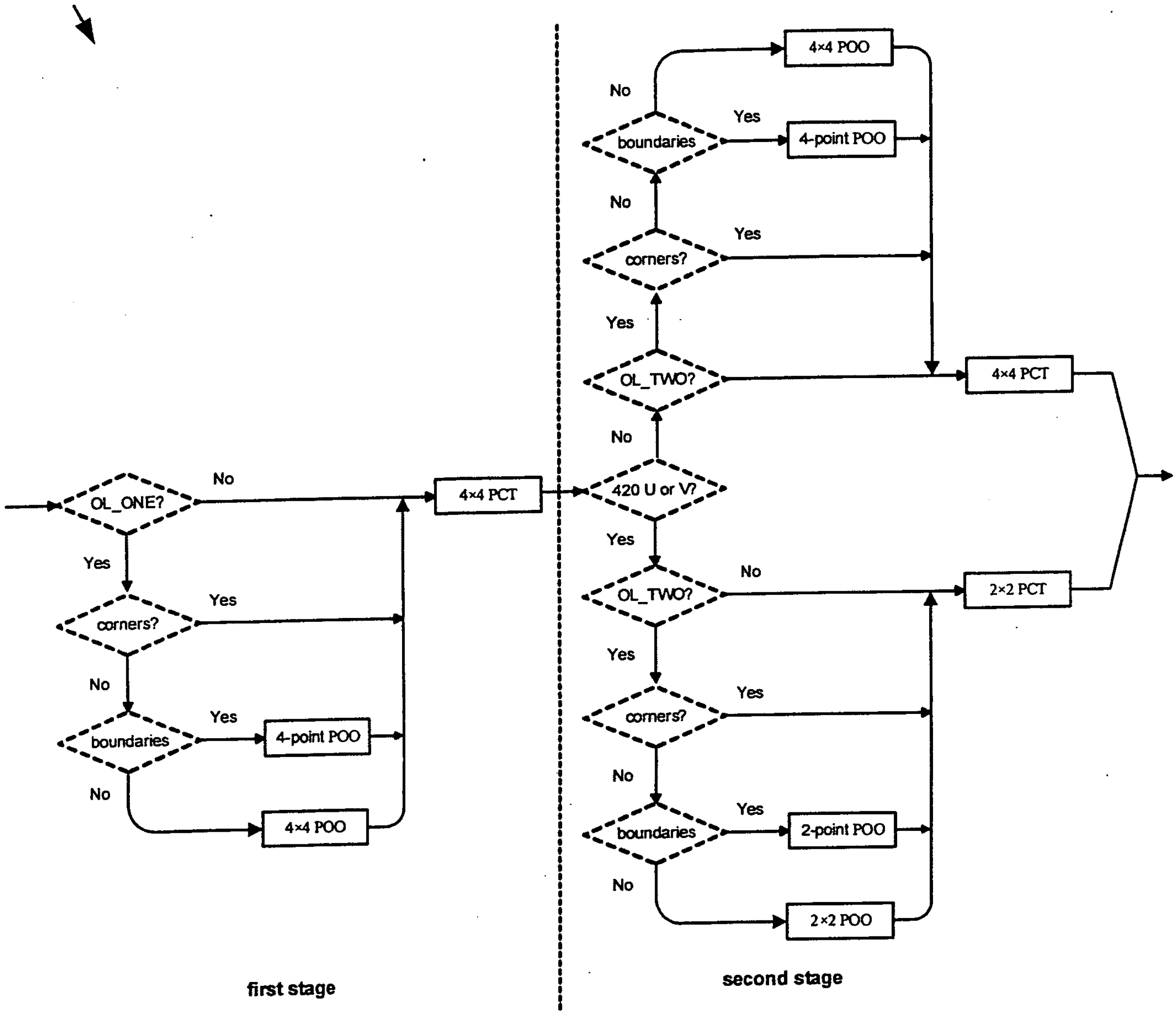

# Figure 18

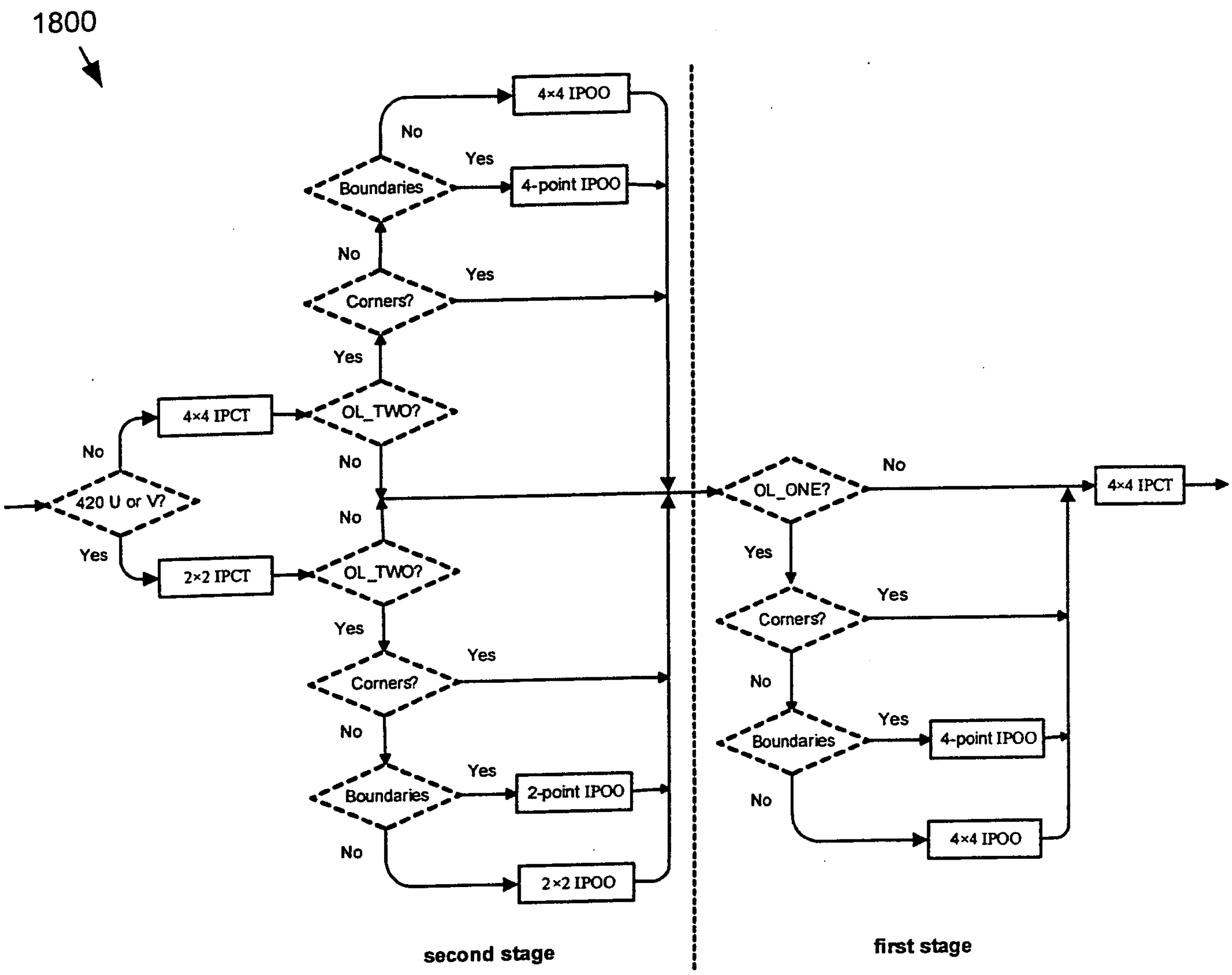
1800
4×4 IPOO
No
Yes
Boundaries
4-point IPOO
No
Yes
Corners?
Yes
4×4 IPCT
OL_TWO?
No
No
420 U or V?
No
Yes
2×2 IPCT
OL_TWO?
Yes
Yes
Corners?
No
Yes
Boundaries
2-point IPOO
No
2×2 IPOO
second stage
OL_ONE?
No
4×4 IPCT
Yes
Yes
Corners?
No
Yes
Boundaries
4-point IPOO
No
4×4 IPOO
first stage

# Figure 19

1900

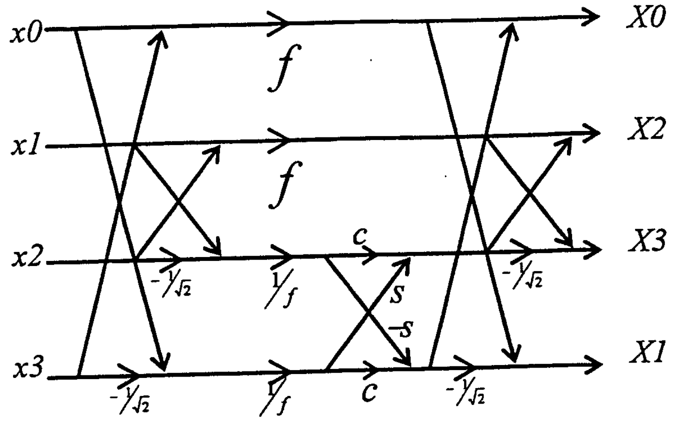


# Figure 20

2000

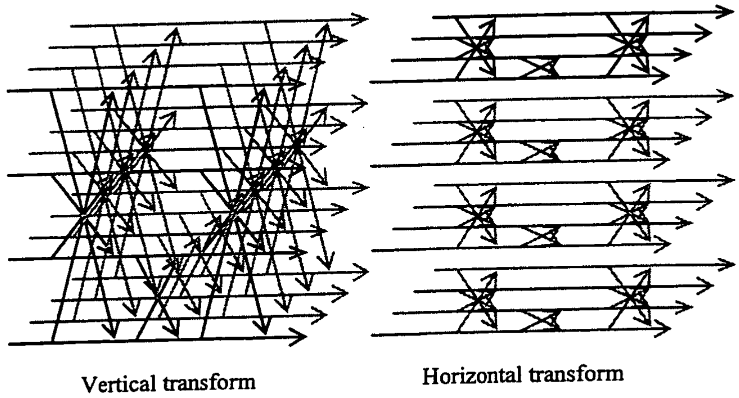


# Figure 21

2100

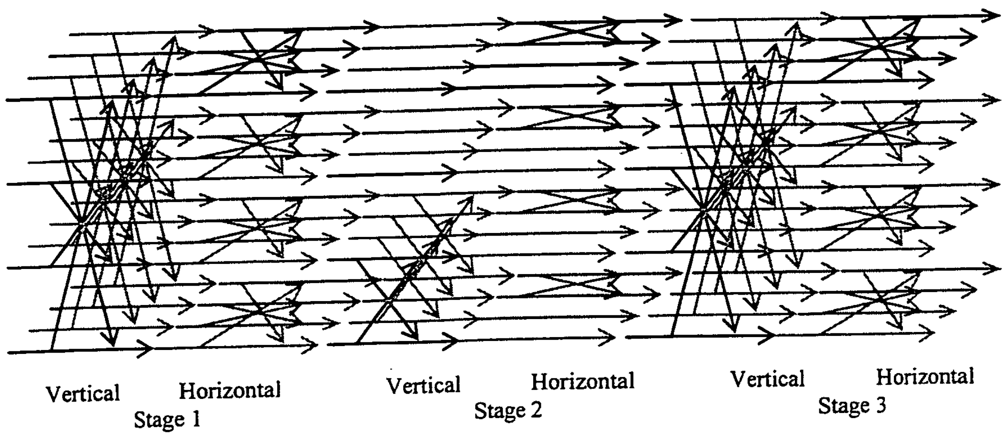

# Figure 22

2200

```
Hadamard22(PixelI & a, PixelI & b, PixelI & c,
PixelI & d)
{
    PixelI t1, t2;

    a += d;
    b -= c;
    t1 = (a - b) >> 1;
    t2 = c;
    c = t1 - d;
    d = t1 - t2;
    a -= d;
    b += c;
}
```

# Figure 23

2300

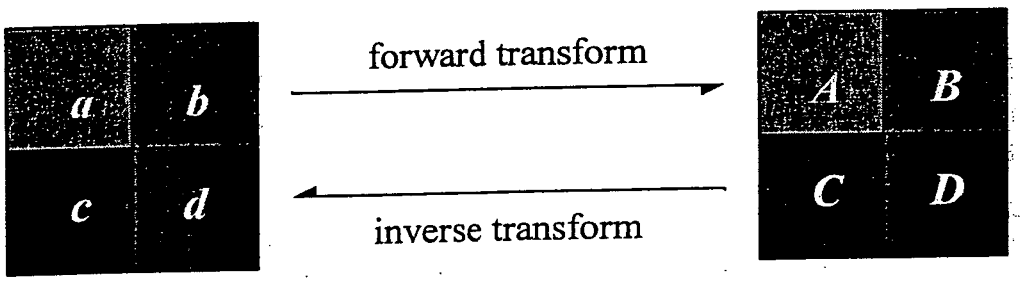


# Figure 24

2400

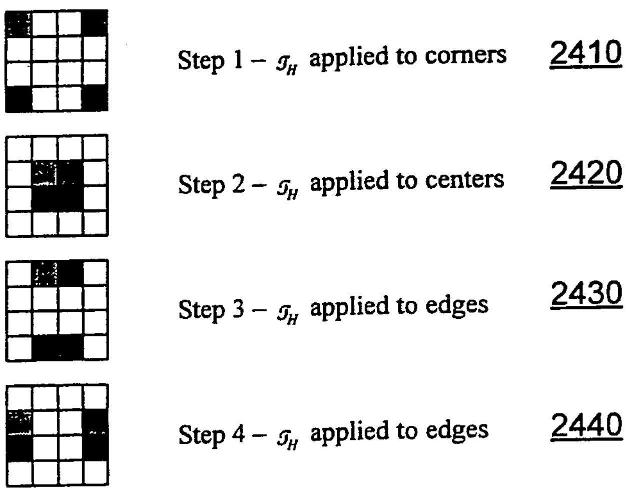

# Figure 25

2500

```
fwdOddOddPre(PixelI &a, PixelI &b, PixelI &c,
PixelI &d)
{
  d += a;
  c -= b;
  a -= (t1 = d >> 1);
  b += (t2 = c >> 1);

  a += (b * 3 + 4) >> 3;
  b -= (a * 3 + 2) >> 2;
  a += (b * 3 + 6) >> 3;

  b -= t2;
  a += t1;
  c += b;
  d -= a;
}
```

# Figure 26

2600

```
invOddOddPost(PixelI &a, PixelI &b, PixelI &c,
PixelI &d)
{
  d += a;
  c -= b;
  a -= (t1 = d >> 1);
  b += (t2 = c >> 1);

  a -= (b * 3 + 6) >> 3;
  b += (a * 3 + 2) >> 2;
  a -= (b * 3 + 4) >> 3;

  b -= t2;
  a += t1;
  c += b;
  d -= a;
}
```

# Figure 27

2700

```
fwdRotatePre(PixelI &a, PixelI &b)
{
   b -= (a + 1) >> 1;
   a += (b + 1) >> 1;
}
```

# Figure 28

2800

```
invRotatePost(PixelI &a, PixelI &b)
{
   a -= (b + 1) >> 1;
   b += (a + 1) >> 1;
}
```

# Figure 29

2900

2910

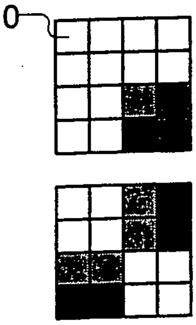

Step 1 – high-high rotations 2920

Step 2 – high-low/low-high 2 point rotations (4 sets) 2930

# Figure 30

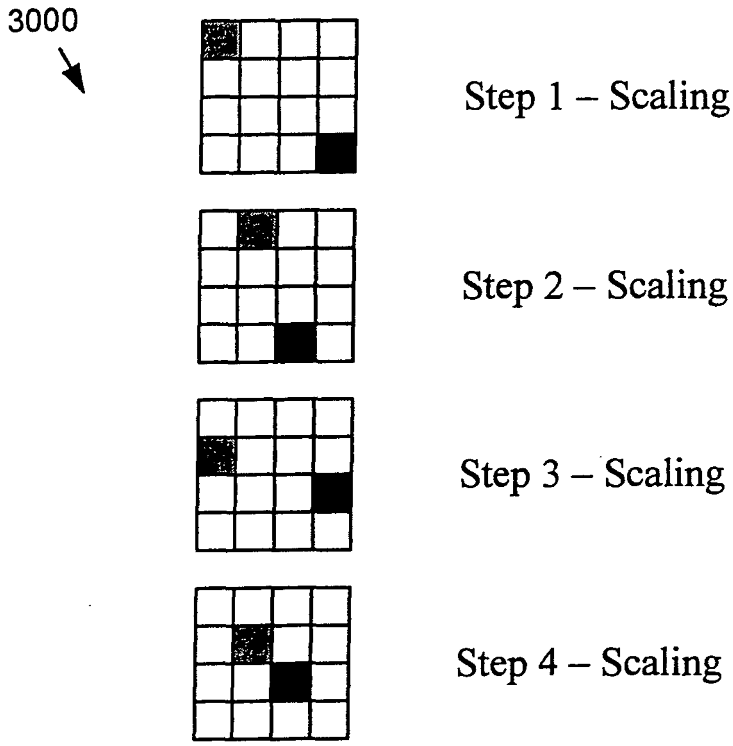


# Figure 31

3100

```
fwdScale(PixelI &a, PixelI &b)
{
    a += b;
    b -= (a + 1) >> 1;

    a += (*b * 3 + 4) >> 3;
    b += (*a * 3 + 8) >> 4;
    a += (*b * 3 + 0) >> 3;

    b += (a + 1) >> 1;
    a -= b;
}
```

# Figure 32

3200

```
invScale(PixelI &a, PixelI &b)
{
    a += b;
    b -= (a + 1) >> 1;

    a -= (*b * 3 + 0) >> 3;
    b -= (*a * 3 + 8) >> 4;
    a -= (*b * 3 + 4) >> 3;

    b += (a + 1) >> 1;
    a -= b;
}
```

# Figure 33

3300

```
PLO44(PixelI &a, PixelI &b, PixelI &c, PixelI
&d, PixelI &e, PixelI &f, PixelI &g, PixelI &h,
PixelI &i, PixelI &j, PixelI &k, PixelI &l,
PixelI &m, PixelI &n, PixelI &o, PixelI &p)
{
    Hadamard22(a, d, m, p);
    Hadamard22(b, c, n, o);
    Hadamard22(e, h, i, l);
    Hadamard22(f, g, j, k);

    fwdScale(a, p);
    fwdScale(b, l);
    fwdScale(e, o);
    fwdScale(f, k);

    fwdRotatePre(n, m);
    fwdRotatePre (j, i);
    fwdRotatePre (h, d);
    fwdRotatePre (g, c);

    fwdOddOddPre(k, l, o, p);

    Hadamard22(a, m, d, p);
    Hadamard22(b, n, c, o);
    Hadamard22(e, i, h, l);
    Hadamard22(f, j, g, k);
}
```

# Figure 34

3400

```
IPLO44(PixelI &a, PixelI &b, PixelI &c, PixelI
&d, PixelI &e, PixelI &f, PixelI &g, PixelI &h,
PixelI &i, PixelI &j, PixelI &k, PixelI &l,
PixelI &m, PixelI &n, PixelI &o, PixelI &p)
{
    Hadamard22(a, m, d, p);
    Hadamard22(b, n, c, o);
    Hadamard22(e, i, h, l);
    Hadamard22(f, j, g, k);

    invOddOddPost(k, l, o, p);

    invRotatePost(n, m);
    invRotatePost (j, i);
    invRotatePost (h, d);
    invRotatePost (g, c);

    invScale(a, p);
    invScale(b, l);
    invScale(e, o);
    invScale(f, k);

    Hadamard22(a, d, m, p);
    Hadamard22(b, c, n, o);
    Hadamard22(e, h, i, l);
    Hadamard22(f, g, j, k);
}
```

# Figure 35

3500

```
fwdPreFilter22(PixelI &a, PixelI &b, PixelI &c,
PixelI &d)
{
    a += d;
    b += c;
    d -= (a + 1) >> 1;
    c -= (b + 1) >> 1;

    b -= ((a + 2) >> 2);
    a -= ((b + 1) >> 1);
    b -= ((a + 2) >> 2);

    d += (a + 1) >> 1;
    c += (b + 1) >> 1;
    a -= d;
   b -= c;
}
```

# Figure 36

3600

```
invPostFilter2x2(PixelI &a, PixelI &b, PixelI
&c, PixelI &d)
{
    a += d;
    b += c;
    d -= (a + 1) >> 1;
    c -= (b + 1) >> 1;

    b += ((a + 2) >> 2);
    a += ((b + 1) >> 1);
    b += ((a + 2) >> 2);

    d += (a + 1) >> 1;
    c += (b + 1) >> 1;
    a -= d;
    b -= c;
}
```

# Figure 37

3700

```
PLO2(PixelI &a, PixelI &b)
{
    b -= (a + 4) >> 3;
    a -= (b + 2) >> 2;
    b -= (a + 4) >> 3;
}
```

# Figure 38

3800

```
IPLO2(PixelI &a, PixelI &b)
{
    b += (a + 4) >> 3;
    a += (b + 2) >> 2;
    b += (a + 4) >> 3;
}
```

# Figure 39

3900

```
PLO4(PixelI &a, PixelI &b, PixelI &c, PixelI &d)
{
   a -= (d * 3 + 16) >> 5;
   b -= (c * 3 + 16) >> 5;
   d -= (a * 3 + 8) >> 4;
   c -= (b * 3 + 8) >> 4;
   a += d - ((d * 3 + 16) >> 5);
   b += c - ((c * 3 + 16) >> 5);
   d -= (a + 1) >> 1;
   c -= (b + 1) >> 1;

   fwdRotatePre(c, d);

   d += (a + 1) >> 1;
   c += (b + 1) >> 1;
   a -= d;
   b -= c;
}
```

# Figure 40

4000

```
IPLO4(PixelI &a, PixelI &b, PixelI &c, PixelI
&d)
{
    b += c;
    a += d;
    c -= (b + 1) >> 1;
    d -= (a + 1) >> 1;

    invRotatePost(c, d);

    c += (b + 1) >> 1;
    d += (a + 1) >> 1;
    b -= c - ((c * 3 + 16) >> 5);
    a -= d - ((d * 3 + 16) >> 5);
    c += (b * 3 + 8) >> 4;
    d += (a * 3 + 8) >> 4;
    b += (c * 3 + 16) >> 5;
    a += (d * 3 + 16) >> 5;
}
```

# Figure 41

4100

```
PCT44(PixelI & a, PixelI & b, PixelI & c, PixelI
& d, PixelI & e, PixelI & f, PixelI & g, PixelI
& h, PixelI & i, PixelI & j, PixelI & k, PixelI
& l, PixelI & m, PixelI & n, PixelI & o, PixelI
& p)
{
    Hadamard22(a, d, m, p);
    Hadamard22(b, n, c, o);
    Hadamard22(e, h, i, l);
    Hadamard22(f, g, j, k);

    Hadamard22(a, b, e, f);

    l = -l;
    o = -o;
    fwdOddOdd(k, l, o, p);

    fwdOdd(h, g, d, c);

    fwdOdd(n, j, m, i);
}
```

# Figure 42

4200

```
fwdOdd(PixelI &a, PixelI &b, PixelI &c, PixelI
&d)
{
  b -= c;
  a += d;
  c += (b + 1) >> 1;
  d = ((a + 1) >> 1) - d;

  /** rotate pi/8 **/
  b -= (3 * a + 4) >> 3;
  a += (3 * b + 4) >> 3;
  d -= (3 * c + 4) >> 3;
  c += (3 * d + 4) >> 3;

  /** butterflies **/
  d += (b) >> 1;
  c -= (a + 1) >> 1;
  b -= d;
  a += c;
}
```

# Figure 43

4300

```
fwdOddOdd(PixelI &a, PixelI &b, PixelI &c,
PixelI &d)
{
  d += a;
  c -= b;
  a -= (t1 = d >> 1);
  b += (t2 = c >> 1);

  /** rotate pi/4 **/
  a += (b * 3 + 4) >> 3;
  b -= (a * 3 + 3) >> 2;
  a += (b * 3 + 3) >> 3;

  b -= t2;
  a += t1;
  c += b;
  d -= a;
}
```

# Figure 44

4400

```
IPCT44(PixelI & a, PixelI & b, PixelI & c,
PixelI & d, PixelI & e, PixelI & f, PixelI & g,
PixelI & h, PixelI & i, PixelI & j, PixelI & k,
PixelI & l, PixelI & m, PixelI & n, PixelI & o,
PixelI & p)
{
    invOdd(n, j, m, i);

    invOdd(h, g, d, c);

    invOddOdd(k, l, o, p);
    o = -o;
    l = -l;

    Hadamard22(a, b, e, f);

    Hadamard22(a, d, m, p);
    Hadamard22(b, n, c, o);
    Hadamard22(e, h, i, l);
    Hadamard22(f, g, j, k);
}
```

# Figure 45

4500

```
invOdd(PixelI &a, PixelI &b, PixelI &c, PixelI
&d)
{
  b += d;
  a -= c;
  d -= (b) >> 1;
  c += (a + 1) >> 1;

  /** rotate pi/8 **/
  a -= (3 * b + 4) >> 3;
  b += (3 * a + 4) >> 3;
  c -= (3 * d + 4) >> 3;
  d += (3 * c + 4) >> 3;

  /** butterflies **/
  c -= (b + 1) >> 1;
  d = ((a + 1) >> 1) - d;
  b += c;
  a -= d;
}
```

# Figure 46

4600

```
invOddOdd(PixelI &a, PixelI &b, PixelI &c,
PixelI &d)
{
  d += a;
  c -= b;
  a -= (t1 = d >> 1);
  b += (t2 = c >> 1);

  /** rotate pi/4 **/
  a - (b * 3 + 3 >> 3;
  b + (a * 3 + 3) >> 2;
  a - (b * 3 + 4 >> 3;

  b -= t2;
  a += t1;
  c += b;
  d -= a;
}
```

# Figure 47

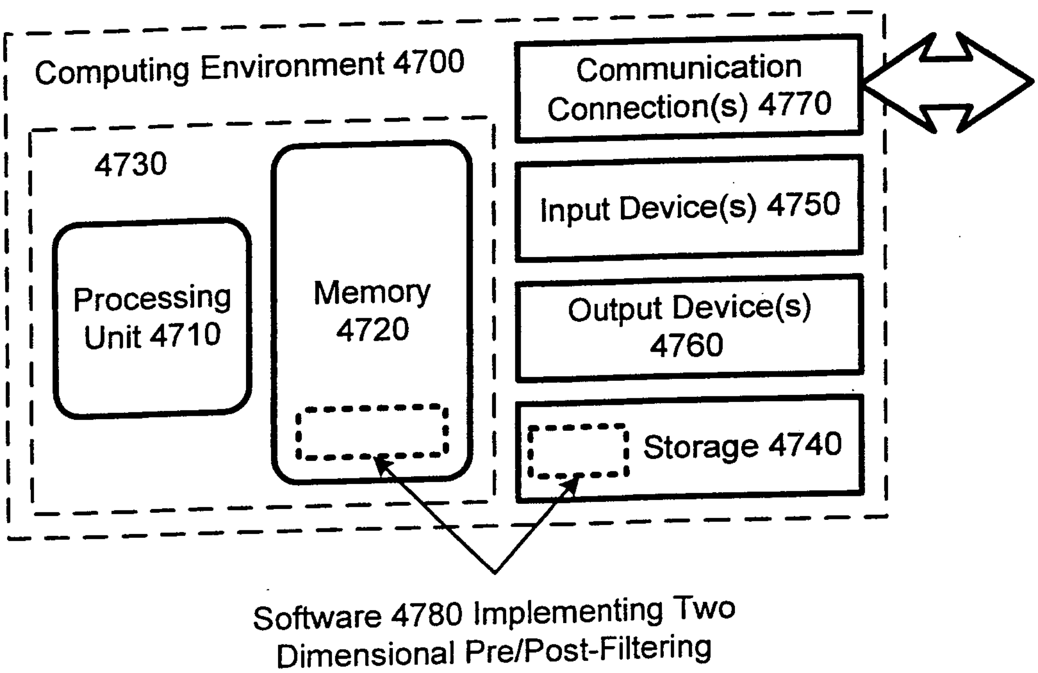

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 01570704 A, Srinivasan

### Non-patent literature cited in the description


- **H. S. MALVAR.** Signal Processing with Lapped Transforms. Artech House, 1992
- **H. S. MALVAR.** A pre- and post-filtering technique for the reduction of blocking effects. *Proc. Picture Coding Symposium,* June 1987
- **T.D. TRAN ; J. LIANG ; C. TU.** Lapped Transform via Time-Domain Pre- and Post-Filtering. *IEEE Trans. on Signal Processing,* June 2003, vol. 51 (6
- **W. DAI ; T. TRAN.** Regularity-constrained pre- and post-filtering for block DCT-based systems. *IEEE Trans. on Signal Processing,* October 2003, vol. 5 (1), 2568-2581
- **R. GEIGER ; J. HERRE ; J. KOLLER ; K. BRANDENBURG.** IntMDCT - A link between perceptual and lossless audio coding. *inProc. IEEE Int. Conf. on Acoustics, Speech, and Signal Processing,* May 2002
- **J. LI.** Reversible FFT And MDCT Via Matrix Lifting. *inProc. IEEE Int. Conf. on Acoustics, Speech, and Signal Processing,* May 2004
- **H. S. MALVAR.** Biorthogonal And Nonuniform Lapped Transforms For Transform Coding With Reduced Blocking And Ringing Artifacts. *IEEE Trans. on Signal Processing,* April 1998, vol. 46, 1043-1053
- Lapped Transform Based Video Coding. **TRAN T D et al.** PROCEEDINGS OF THE INTERNATIONAL SOCIETY FOR OPTICAL ENGINEERING (SPIE). SPIE, 01 August 2001, vol. 4472, 319-333
- The two-dimensional lapped Hadamard transform. **MURAMATSU S et al.** CIRCUITS AND SYSTEMS; 1998; ISCAS '98. PROCEEDINGS OF THE 1998 IEEE INTERNATIONAL SYMPOSIUM ON MONTEREY. IEEE, 31 May 1998, vol. 5, 86-89
- **N. AHMED ; T. NATARAJAN ; K.R. RAO.** Discrete Cosine Transform. *IEEE Transactions on Computers,* January 1974, vol. C-23, 90-93
- IEEE Standard Specification for the Implementations of 8x8 Inverse Discrete Cosine Transform. *IEEE Std. 1180-1990,* 06 December 1990
- **H. MALVAR.** Signal Processing with Lapped Transforms. Artech House, 1992
- **A. A. M. L. BRUEKENS ; A. W. M. VAN DEN ENDEN.** New networks for perfect inversion and perfect reconstruction. *IEEE J. Selected Areas Communications,* 1992, vol. 10 (1
- **I. DAUBECHIES ; W. SWELDENS.** Factoring wavelet transform into lifting steps. *J. Fourier Anal. Appl.,* 1998, vol. 4, 247-269
- **J. LIANG ; T. D. TRAN.** Fast Multiplierless Approximations Of The DCT With The Lifting Scheme. *IEEE Trans. Signal Processing,* December 2001, vol. 49, 3032-3044